# EUROPEAN PATENT APPLICATION

(11) **EP 3 410 433 A1**
(43) Date of publication of application: **05.12.2018**
(21) Application number: 16888071.4
(22) Date of filing: 24.10.2016
(51) Int. Cl.: G10L 15/22, G06F 3/0481, G06F 3/0484, G06F 3/16, G10L 15/00

(54) **INFORMATION PROCESSING DEVICE, INFORMATION PROCESSING METHOD, AND PROGRAM**

(30) Priority: 28.01.2016 JP 2016013899
(71) Applicant: Sony Corporation, Tokyo 108-0075 (JP)
(72) Inventor: TAKI, Yuhei, Tokyo 108-0075 (JP); KAWANO, Shinichi, Tokyo 108-0075 (JP); SAWAI, Kunihito, Tokyo 108-0075 (JP); NAKAGAWA, Yusuke, Tokyo 108-0075 (JP); KATO, Ayumi, Tokyo 108-0075 (JP)
(74) Representative: MFG Patentanwälte Meyer-Wildhagen Meggle-Freund Gerhard PartG mbB
(86) International application number: PCT/JP2016/081470
(87) International publication number: WO 2017/130486

(57) **Abstract**

[Object] It is desirable to provide technology capable of allowing the user who listens to the result of the speech recognition processing to get to know the accuracy of the speech recognition processing.

[Solution] Provided is an information processing device including: an information acquisition unit configured to acquire information related to accuracy of speech recognition processing on sound information based on sound collection; and an output control unit configured to control a speech output mode of a result of the speech recognition processing on a basis of the information related to the accuracy of the speech recognition processing.

## Description

### Technical Field

The present disclosure relates to an information processing device, a method of information processing, and a program.

### Background Art

Recently, there has been a technique for performing speech recognition processing on sound information collected by a microphone to obtain a result of the speech recognition processing from the sound information (e.g., see Patent Literature 1). In one example, the result of the speech recognition processing obtained by the speech recognition processing is output by a speech output device in a predetermined speech output mode.

### Citation List

### Patent Literature

Patent Literature 1: JP 2000-285063A

### Disclosure of Invention

### Technical Problem

It is however difficult for the user to get to know what degree of accuracy of the speech recognition processing only by listening to the result of the speech recognition processing. Thus, it is desirable to provide technology capable of allowing the user who listens to the result of the speech recognition processing to get to know the accuracy of the speech recognition processing.

### Solution to Problem

According to the present disclosure, there is provided an information processing device including: an information acquisition unit configured to acquire information related to accuracy of speech recognition processing on sound information based on sound collection; and an output control unit configured to control a speech output mode of a result of the speech recognition processing on a basis of the information related to the accuracy of the speech recognition processing.

According to the present disclosure, there is provided an information processing method including: acquiring information related to accuracy of speech recognition processing on sound information based on sound collection; and controlling, by a processor, a speech output mode of a result of the speech recognition processing on a basis of the information related to the accuracy of the speech recognition processing.

According to the present disclosure, there is provided a program for causing a computer to function as an information processing device including: an information acquisition unit configured to acquire information related to accuracy of speech recognition processing on sound information based on sound collection; and an output control unit configured to control a speech output mode of a result of the speech recognition processing on a basis of the information related to the accuracy of the speech recognition processing.

### Advantageous Effects of Invention

According to the present disclosure as described above, there is provided the technology capable of allowing the user listening to the result of the speech recognition processing to get to know the accuracy of the speech recognition processing. Note that the effects described above are not necessarily limitative. With or in the place of the above effects, there may be achieved any one of the effects described in this specification or other effects that may be grasped from this specification.

### Brief Description of Drawings

[FIG. 1] FIG. 1 is a block diagram illustrating a functional configuration example of an information processing system according to an embodiment of the present disclosure.
[FIG. 2] FIG. 2 is a diagram illustrating a configuration example of a communication system according to the present embodiment.
[FIG. 3] FIG. 3 is a diagram illustrated to describe an overview of the information processing system.
[FIG. 4] FIG. 4 is a diagram illustrating an example of a speech output speed corresponding to noise volume and utterance volume.
[FIG. 5] FIG. 5 is a diagram illustrating an example of a speech output speed corresponding to an utterance length and utterance volume.
[FIG. 6] FIG. 6 is a diagram illustrating an example of a speech output speed corresponding to a confidence level and utterance volume.
[FIG. 7] FIG. 7 is a diagram illustrating an example of the presence or absence of Prefix corresponding to noise volume and utterance volume.
[FIG. 8] FIG. 8 is a diagram illustrating an example of the presence or absence of Prefix corresponding to an utterance length and utterance volume.
[FIG. 9] FIG. 9 is a diagram illustrating an example of a speech output speed corresponding to a confidence level and utterance volume.
[FIG. 10] FIG. 10 is a diagram illustrating an example of the relationship between an amount of text and a speech output speed.
[FIG. 11] FIG. 11 is a diagram illustrating an example of the presence or absence of speech output corresponding to a text's font size and viewing distance.
[FIG. 12] FIG. 12 is a diagram illustrating an example of the presence or absence of speech output corresponding to the presence or absence of a line-of-sight retention.
[FIG. 13] FIG. 13 is a diagram illustrated to describe an overview of an example in which an input mode is started in a case where an input start trigger is detected.
[FIG. 14] FIG. 14 is a diagram illustrated to describe a first overview of an example in which the input mode is started after the result of the speech recognition processing is obtained.
[FIG. 15] FIG. 15 is a diagram illustrated to describe a second overview of an example in which the input mode is switched after the result of the speech recognition processing is obtained.
[FIG. 16] FIG. 16 is a diagram illustrated to describe an example in which a symbol input mode is activated after a text input mode.
[FIG. 17] FIG. 17 is a diagram illustrated to describe an example in which a symbol input mode and a command input mode are activated after a text input mode.
[FIG. 18] FIG. 18 is a diagram illustrated to describe an example in which a text input mode or a symbol input mode is initially activated.
[FIG. 19] FIG. 19 is a diagram illustrated to describe an example in which a text input mode or a symbol input mode is initially activated.
[FIG. 20] FIG. 20 is a diagram illustrated to describe an example in which a symbol input mode is automatically activated on the basis of contents of a message previously transmitted or received.
[FIG. 21] FIG. 21 is a diagram illustrated to describe an example in which the symbol input mode is not automatically activated on the basis of contents of a message previously transmitted or received.
[FIG. 22] FIG. 22 is a diagram illustrated to describe an example of controlling whether to automatically activate a command input mode on the basis of the operation frequency of a controller.
[FIG. 23] FIG. 23 is a diagram illustrated to describe an example of controlling whether to automatically activate a symbol input mode on the basis of emotion information of a user.
[FIG. 24] FIG. 24 is a diagram illustrating a modified example of an utterance screen.
[FIG. 25] FIG. 25 is a diagram illustrating an example of an utterance screen in a case where text input is performed on the basis of a user's utterance.
[FIG. 26] FIG. 26 is a diagram illustrating an example of an utterance screen in a case where symbol input is performed on the basis of a user's utterance.
[FIG. 27] FIG. 27 is a block diagram illustrating a hardware configuration example of an information processing system.

### Mode(s) for Carrying Out the Invention

Hereinafter, (a) preferred embodiment(s) of the present disclosure will be described in detail with reference to the appended drawings. In this specification and the appended drawings, structural elements that have substantially the same function and structure are denoted with the same reference numerals, and repeated explanation of these structural elements is omitted.

Note that, in this description and the drawings, structural elements that have substantially the same function and structure are sometimes distinguished from each other using different numbers after the same reference sign. However, when there is no need in particular to distinguish structural elements that have substantially the same function and structure, the same reference sign alone is attached.

Moreover, the description is given in the following order.
1. Embodiment of present disclosure
1.1. System configuration example
1.2. Functional configuration example
1.3. Details of function of information processing system
1.4. Hardware configuration example
2. Conclusion

### <1. Embodiment of present disclosure>

### [1.1. System configuration example]

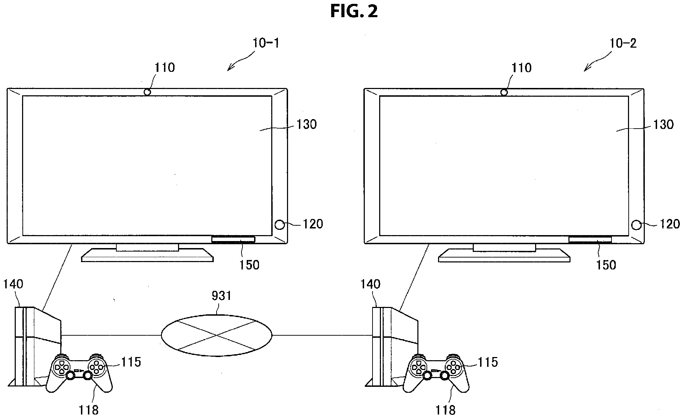

A configuration example of a communication system according to an embodiment of the present disclosure is described with reference to the drawings. FIG. 2 is a diagram illustrating a configuration example of a communication system according to an embodiment of the present disclosure. As illustrated in FIG. 2, the communication system according to the present embodiment is configured to include an information processing system 10-1 and an information processing system 10-2. Each of the information processing system 10-1 and the information processing system 10-2 is configured to include an image input unit 110, an operation input unit 115, a biometric information input unit 118, a sound collection unit 120, a display unit 130, a sound output unit 150, and an information processing device (hereinafter also referred to as "control unit") 140.

The information processing device 140 in the information processing system 10-1 can communicate with the information processing device 140 in the information processing system 10-2 via a communication network 931. In addition, in the information processing system 10, the image input unit 110, the sound collection unit 120, and the sound output unit 150 are provided on the frame of the display unit 130. However, the position where the image input unit 110, the sound collection unit 120, and the sound output unit 150 are provided is not limited. The image input unit 110, the sound collection unit 120, and the sound output unit 150 may be provided at a position other than the frame in the display unit 130, or may be provided at a position (e.g., the operation input unit 115) other than the display unit 130, and sound information collected by the sound collection unit 120 may be transmitted to the information processing device 140. In one example, the sound collection unit 120 and the sound output unit 150 may be provided on a device (e.g., a headset, etc.) separate from the display unit 130 or the like.

Moreover, in the example illustrated in FIG. 2, the information processing device 140 is a game console, but the form of the information processing device 140 is not limited to the game console. In one example, the information processing device 140 may be a smartphone, a mobile phone, a tablet terminal, or a personal computer (PC). In addition, in the example illustrated in FIG. 2, the display unit 130 is given in the form of a television set, but the form of the display unit 130 is not limited to the television set. In the following description, the terms speech (or voice) and sound are used herein to be distinguished from each other.

The configuration example of the communication system according to the present embodiment is described above.

### [1.2. Functional configuration example]

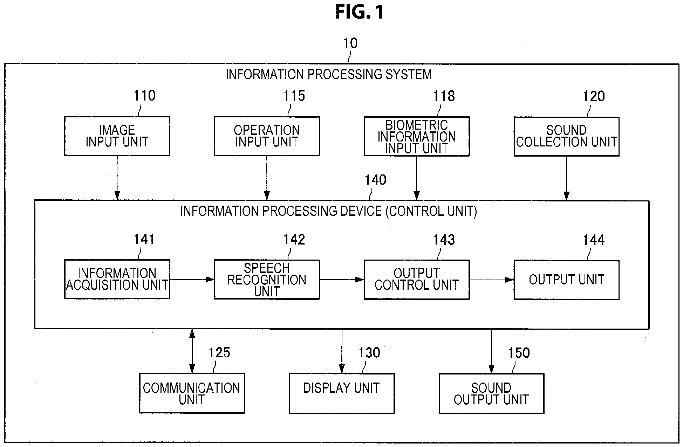

Then, a functional configuration example of the information processing system 10 according to the present embodiment is described. FIG. 1 is a block diagram illustrating a functional configuration example of the information processing system 10 according to the present embodiment. As illustrated in FIG. 1, the information processing system 10 is configured to include the image input unit 110, the operation input unit 115, the biometric information input unit 118, the sound collection unit 120, a communication unit 125, the display unit 130, the sound output unit 150, and the control unit 140.

The image input unit 110 has a function to input an image. In one example, the image input unit 110 includes a camera, and accepts an image captured by the camera as input. The number of cameras included in the image input unit 110 is not limited to a particular number as long as it is one or more. The position where each of one or more cameras included in the image input unit 110 is provided is also not limited to a particular position. In addition, an example of one or more cameras may include a monocular camera or a stereo camera.

The operation input unit 115 has a function to input a user's operation. In one example, the operation input unit 115 may include a controller of the game console. In addition, the operation input unit 115 may have a function to input a user's operation, and thus it may include a touch panel. An example of the type employed by the touch panel may include, but is not limited to, electrostatic capacitive, resistance film, infrared, or ultrasonic type. Further, the operation input unit 115 may be configured to include a camera.

The biometric information input unit 118 has a function to input biometric information of the user. In one example, in the case where the biometric information input unit 118 is provided with a pressure sensor, it is capable of inputting gripping pressure of the controller gripped by the user using the pressure sensor as biometric information. In addition, in the case where the biometric information input unit 118 is provided with a heartbeat sensor, it is capable of inputting the heartbeat of the user using the heartbeat sensor as biometric information. In addition, in the case where the biometric information input unit 118 is provided with a perspiration sensor, it is capable of inputting perspiration rates of the user using the perspiration sensor as biometric information. Moreover, in the present embodiment, the case where the biometric information input unit 118 is provided in the controller of the game console is mainly described, but the biometric information input unit 118 may be provided in a wearable device.

The sound collection unit 120 has a function to obtain sound information by sound collection. As described with reference to FIG. 2, the sound collection unit 120 may be provided on the frame of the display unit 130, but may be provided at a position other than the frame in the display unit 130 or may be provided at a position (e.g., the operation input unit 115) other than the display unit 130. The number of microphones included in the sound collection unit 120 is not limited to a particular number as long as it is one or more. In addition, the position where each of one or more microphones included in the sound collection unit 120 is provided is also not limited to a particular position.

However, in the case where the sound collection unit 120 is provided with a plurality of microphones, the arrival direction of sound can be estimated on the basis of the sound information obtained by sound collection by each of the plurality of microphones. Alternatively, in the case where the sound collection unit 120 is provided with a directional microphone, the arrival direction of sound can be estimated on the basis of the sound information obtained by sound collection by the directional microphone.

The control unit 140 executes control of each component in the information processing system 10. As illustrated in FIG. 1, the control unit 140 is configured to include an information acquisition unit 141, a speech recognition unit 142, an output control unit 143, and an output unit 144. Details of each of these functional blocks will be described later. Moreover, the control unit 140 may be composed of, for example, a central processing unit (CPU). In the case where the information processing device 140 is composed of a processing device such as a CPU, the processing device may be composed of electronic circuits.

The communication unit 125 has a function to communicate with another information processing system 10. In one example, the communication unit 125 is composed of a communication interface. In one example, the communication unit 125 can communicate with the other information processing system 10 via the communication network 931 (FIG. 2).

The display unit 130 has a function to display a screen. In one example, the display unit 130 may be a liquid crystal display, an organic electro-luminescence (EL) display, or a head-mounted display (HMD). However, the display unit 130 may be other forms of display as long as it has a function to display a screen.

The sound output unit 150 has a function to output sound information. In one example, the sound output unit 150 may be a loudspeaker, a headphone, or an earphone. However, the sound output unit 150 may be other forms of sound output device as long as it has a function to output sound information.

The functional configuration example of the information processing system 10 according to the present embodiment is described above.

### [1.3. Details of function of information processing system]

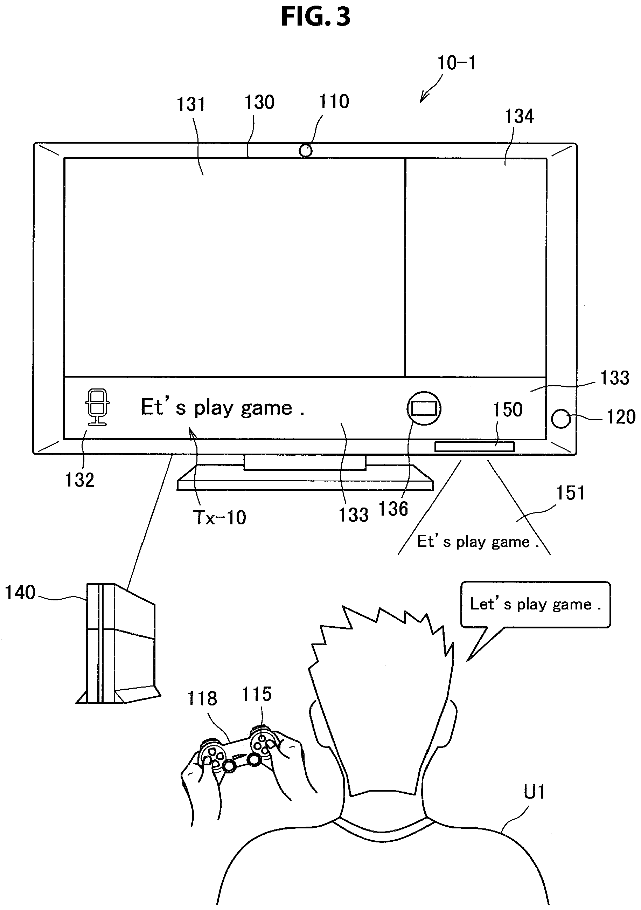

Then, the function of the information processing system 10 is described in detail. FIG. 3 is a diagram illustrated to describe an overview of the information processing system 10. Referring to FIG. 3, a video image display screen 131 on which a video image reproduced by the control unit 140 is displayed is located in the display unit 130. Here, the control unit 140 is envisaged to be a game console, and thus the video image displayed on the video image display screen 131 is a video image included in a game application.

Further, as illustrated in FIG. 3, a chat application for allowing a user U1 of the information processing system 10-1 to chat with a user of the information processing system 10-2 is executed by the control unit 140, and its execution screen is displayed as a chat screen 134 by the display unit 130. Specifically, the result of the speech recognition processing on the sound information including utterance of the user U1 and the result of the speech recognition processing on the sound information including utterance of the user of the information processing system 10-2 are displayed on the chat screen 134.

In this regard, the result of the speech recognition processing may be one-character data obtained by performing the speech recognition processing on the sound information or character string data in which a plurality of characters are arranged. Alternatively, the result of the speech recognition processing may be a result by reading out the one-character data or the character string data obtained in this manner by the system. The following description is given by using "text" and "text readout result" as an example of the result of the speech recognition processing.

On the other hand, the display unit 130 also has a recognition result screen 133 on which text is displayed as an example of the result of the speech recognition processing on the sound information collected by the sound collection unit 120 of the information processing system 10-1. The recognition result screen 133 is included in an utterance screen 135, and the utterance screen 135 has a speech recognition processing start button 132 used to start the speech recognition processing. In the present embodiment, an example in which the speech recognition processing start button 132 is a graphical user interface (GUI) button is mainly described, but the speech recognition processing start button 132 may be a hardware button (e.g., a hardware button included in the operation input unit 115). When the user U1 performs an operation for selecting the speech recognition processing start button 132 (hereinafter also referred to as "recognition start operation"), a recognition start operation is input with the operation input unit 115, the information acquisition unit 141 acquires the sound information collected by the sound collection unit 120, and the speech recognition unit 142 starts the sound recognition processing on the sound information. In this event, the user U1 starts utterance.

Moreover, in the present embodiment, the signal collected by the sound collection unit 120 is referred to as sound information, but the sound information may be a signal obtained by performing some signal processing tasks on the signal collected by the sound collection unit 120. Then, if a text Tx-10 is obtained by executing the speech recognition processing by the speech recognition unit 142, the output unit 144 outputs the text Tx-10 to the display unit 130. The display unit 130 displays the text Tx-10 that is output by the output unit 144 on the recognition result screen 133.

In the example illustrated in FIG. 3, the user U1 utters "Let's play game.", while the text Tx-10 "Et's play game." is displayed on the recognition result screen 133 as an example of the result of the speech recognition processing with respect to the sound information collected by the sound collection unit 120 of the information processing system 10-1. In addition, the text Tx-10 "Et's play game." is read out by the output control unit 143, and the readout result of the text Tx-10 is output by the sound output unit 150.

Further, a speech recognition processing end button 136 used to end the speech recognition processing is displayed on the recognition result screen 133. When the user U1 performs an operation for selecting the speech recognition processing end button 136 (hereinafter also referred to as "recognition end operation"), the recognition end operation is input with the operation input unit 115, the speech recognition unit 142 ends the speech recognition processing, and the output control unit 143 causes the text Tx-10 to be added to the chat screen 134. In addition, the text Tx-10 is transmitted to the control unit 140 in the information processing system 10-2 and is displayed on the chat screen in the information processing system 10-2.

### [1.3.1. Getting to know accuracy of speech recognition processing]

Here, it is difficult for the user U1 to get to know what degree of accuracy of the speech recognition processing only by listening to the readout result of the text Tx-10 "Et's play game.". Specifically, the text Tx-10 "Et's play game." is different from the utterance contents of the user U1, "Let's play game.", but it is difficult for the user U1 to get to know the reduced accuracy of the speech recognition processing. In particular, when the user U1 is concentrated on the video image display screen 131, it is inconvenient for the user to check whether the speech recognition processing is performed normally. Thus, it is desirable to provide technology that allows the user U1 listening to the result of the speech recognition processing to get to know the accuracy of the speech recognition processing.

Specifically, in the embodiment of the present disclosure, the information acquisition unit 141 acquires information related to the accuracy of the speech recognition processing on the sound information. In addition, the output control unit 143 reads out the text Tx-10 and controls a speech output mode of the readout result of the text Tx-10 on the basis of the information related to the accuracy of the speech recognition processing. Then, the output unit 144 outputs the readout result obtained in the controlled speech output mode to the sound output unit 150. The sound output unit 150 outputs the readout result that is output from the output unit 144.

In this manner, in the embodiment of the present disclosure, the speech output mode of the readout result of the text Tx-10 is controlled on the basis of the information related to the accuracy of the speech recognition processing. Such a configuration makes it possible for the user U1 to get to know the accuracy of the speech recognition processing by virtue of the speech output mode of the readout result of the text Tx-10.

Moreover, the following description is given of a case where the control of the speech output mode is performed for each sentence as an example, but the unit of control of the speech output mode is not particularly limited. In one example, the control of the speech output mode may be performed for each word or phrase.

Here, the information related to the accuracy of the speech recognition processing is not particularly limited. In one example, the information related to the accuracy of the speech recognition processing may include information related to the utterance of the user U1 that is included in the sound information collected by the sound collection unit 120. The information related to the utterance of the user U1 may include at least one of utterance volume of the user U1, utterance clarity of the user U1, and utterance length of the user U1, which are included in the sound information collected by the sound collection unit 120.

Alternatively, the information related to the accuracy of the speech recognition processing may include information related to noise corresponding to the utterance of the user U1 that is included in the sound information collected by the sound collection unit 120. The information related to the noise may include the noise volume that is included in the sound information collected by the sound collection unit 120.

Further, the speech output mode of the readout result of the text Tx-10 is also not particularly limited. In one example, the speech output mode of the readout result of the text Tx-10 may include the speech output speed of the readout result the text Tx-10 by the sound output unit 150. A specific example thereof will be described below.

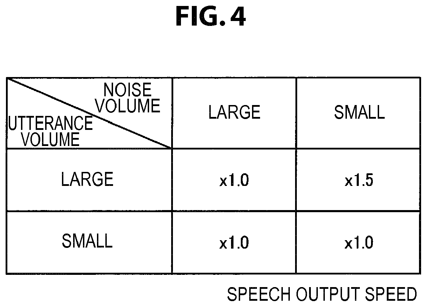

FIG. 4 is a diagram illustrating an example of the speech output speed corresponding to noise volume and utterance volume. Here, in a case where the noise volume is smaller than a threshold value for noise volume determination as compared with a case where the noise volume is smaller than the threshold value for noise volume determination, the accuracy of the speech recognition processing is considered to be lower. Thus, in such a case, the output control unit 143 preferably decreases the speech output speed so that the user U1 can easily get to know the readout result of the text Tx-10. On the other hand, in a case where the noise volume is larger than the threshold value for the noise volume determination, the output control unit 143 preferably increases the speech output speed to complete the readout of the text Tx-10 earlier.

Further, in a case where the utterance volume is smaller than a threshold value for utterance volume determination as compared with a case where the utterance volume is larger than the threshold value for the utterance volume determination, the accuracy of the speech recognition processing is considered to be lower. Thus, in such a case, the output control unit 143 preferably decreases the speech output speed so that the user U1 can easily get to know the readout result of the text Tx-10. On the other hand, in a case where the utterance volume is larger than the threshold value for the utterance volume determination, the output control unit 143 preferably increases the speech output speed to complete the readout of the text Tx-10 earlier.

As illustrated in FIG. 4, in a predetermined section of the utterance volume (a section where the utterance volume is larger than the threshold value for utterance volume determination in the example illustrated in FIG. 4), in a case where the noise volume is larger than the threshold value for noise volume determination as compared with a case where the noise volume is smaller than the threshold value for noise volume determination, the accuracy of the speech recognition processing is considered to be lower. Thus, in such a case, the output control unit 143 preferably decreases the speech output speed so that the user U1 can easily get to know the readout result of the text Tx-10.

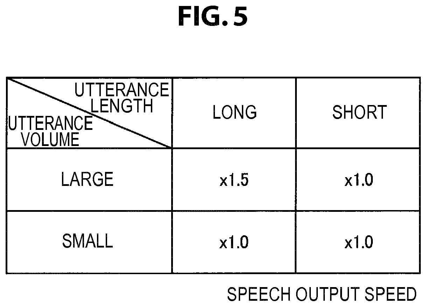

FIG. 5 is a diagram illustrating an example of the speech output speed corresponding to the utterance length and the utterance volume. Here, in a case where the utterance length is shorter the threshold value for utterance length determination as compared with a case where the utterance length is longer than the threshold value for utterance length determination, the accuracy of the speech recognition processing is considered to be lower. Thus, in such a case, the output control unit 143 preferably decreases the speech output speed so that the user U1 can easily get to know the readout result of the text Tx-10. On the other hand, in a case where the utterance volume is larger than the threshold value for utterance volume determination, the output control unit 143 preferably increases the speech output speed to complete the readout of the text Tx-10 earlier.

As illustrated in FIG. 5, in a predetermined section of the utterance volume (a section where the utterance volume is larger than the threshold value for utterance volume determination in the example illustrated in FIG. 5), in a case where the utterance length is shorter than the threshold value for utterance length determination as compared with a case where the utterance length is longer than the threshold value for utterance length determination, the accuracy of the speech recognition processing is considered to be lower. Thus, in such a case, the output control unit 143 preferably decreases the speech output speed so that the user U1 can easily get to know the readout result of the text Tx-10.

Moreover, although not illustrated, the utterance clarity may be handled in a similar manner to the utterance volume and the utterance length. In other words, in a case where the utterance clarity is smaller than a threshold value for utterance clarity determination as compared with a case where the utterance clarity is larger than the threshold value for utterance clarity determination, the accuracy of the speech recognition processing is considered to be lower. Thus, in such a case, the output control unit 143 preferably decreases the speech output speed so that the user U1 can easily get to know the readout result of the text Tx-10. On the other hand, in a case where the utterance clarity is larger than the threshold value for utterance clarity determination, the output control unit 143 preferably increases the speech output speed to complete the readout of the text Tx-10 earlier.

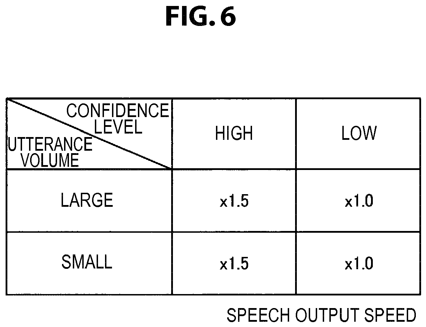

Further, the information related to the accuracy of the speech recognition processing may include a confidence level of the result of the speech recognition processing. In one example, this confidence level is acquired from the speech recognition unit 142. FIG. 6 is a diagram illustrating an example of the speech output speed corresponding to the confidence level and the utterance volume. As illustrated in FIG. 6, in a case where the confidence level is lower than a threshold value for confidence level determination as compared with the case where the confidence level is higher than the threshold value for confidence level determination, the accuracy of the speech recognition processing is considered to be lower. Thus, in such a case, the output control unit 143 preferably decreases the speech output speed so that the user U1 can easily get to know the readout result of the text Tx-10. On the other hand, in a case where the confidence level is higher than the threshold value for confidence level determination, the output control unit 143 preferably increases the speech output speed to complete the readout of the text Tx-10 earlier.

Further, in the examples illustrated in FIGS. 4 to 6, the speech output speed is indicated depending on how many times higher the speech output speed is than the readout speed by setting the normal readout speed of the text Tx-10 by the output control unit 143 as a reference. However, the readout speed that is being a reference is not limited to this case. In one example, the readout speed that is being a reference may be the readout speed in consideration of the utterance speed of the user U1. Alternatively, the readout speed that is being a reference may be a readout speed that takes into consideration the frequency at which the user U1 interacts with other users by chat. In addition, the speech output speed is not limited to how many times higher the speech output speed is than the readout speed as a reference.

In the above description, the speech output speed is used as an example of the speech output mode, but the speech output mode is not limited to this example. In one example, the speech output mode may include a type of the output speech (hereinafter also referred to as "Prefix") that is output before the speech output of the readout result of the text Tx-10. In other words, the output control unit 143 may control the type of Prefix on the basis of the information related to the accuracy of the speech processing result. There are no particular limitations on the type of Prefix, and specifically, a word (e.g., check, to be confirmed, warning, etc.) or sound (e.g., the type of sound effect, the number of times a sound effect is emitted, etc.) uttered to attract the attention of the user U1 may be used.

Moreover, the following description is assumed that there are two cases as an example of the type of Prefix, that is, a case where Prefix is attached to the readout result of the text Tx-10 (a case where Prefix with content is attached) and a case where Prefix is not attached to the readout result of the text Tx-10 (a case where Prefix with no content is attached).

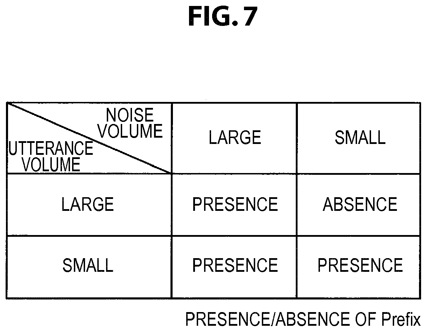

FIG. 7 is a diagram illustrating an example of the presence or absence of Prefix corresponding to the noise volume and the utterance volume. Here, as described above, in a case where the noise volume is larger than the threshold value for noise volume determination as compared with the case where the noise volume is smaller than the threshold value for noise volume determination, the accuracy of the speech recognition processing is considered to be lower. Thus, in such a case, the output control unit 143 preferably attaches Prefix to the readout result of the text Tx-10 so that the user U1 can easily get to know the readout result of the text Tx-10. On the other hand, in a case where the noise volume is smaller than the threshold value for noise volume determination, the output control unit 143 preferably does not attach Prefix to the readout result of the text Tx-10 so that the readout of the text Tx-10 can be completed earlier.

On the other hand, in a case where the utterance volume is smaller than a threshold value for utterance volume determination as compared with the case where the utterance volume is larger than the threshold value for utterance volume determination, the accuracy of the speech recognition processing is considered to be lower. Thus, in such a case, the output control unit 143 preferably attaches Prefix to the readout result of the text Tx-10 so that the user U1 can easily get to know the readout result of the text Tx-10. On the other hand, in the case where the utterance volume is larger than the threshold value for utterance volume determination, the output control unit 143 preferably does not attach Prefix to the readout result of the text Tx-10 so that the readout of the text Tx-10 can be completed earlier.

As illustrated in FIG. 7, in a predetermined section of the utterance volume (in a section where the utterance volume is larger than the threshold value for utterance volume determination in the example illustrated in FIG. 7), in a case where the noise volume is larger than the threshold value for noise volume determination as compared with the case where the noise volume is smaller than the threshold value for noise volume determination, the accuracy of the speech recognition processing is considered to be lower. Thus, in such a case, the output control unit 143 preferably decreases the speech output speed so that the user U1 can easily get to know the readout result of the text Tx-10.

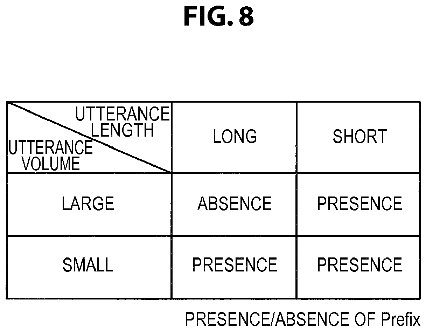

FIG. 8 is a diagram illustrating an example of the presence or absence of Prefix corresponding to the utterance length and the utterance volume. Here, as described above, in a case where the utterance length is shorter than a threshold value for utterance length determination as compared with the case where the utterance length is longer than the threshold value for utterance length determination, the accuracy of the speech recognition processing is considered to be lower. Thus, in such a case, the output control unit 143 preferably attaches Prefix to the readout result of the text Tx-10 so that the user U1 can easily get to know the readout result of the text Tx-10. On the other hand, in the case where the utterance length is longer than the speech length determination threshold value, the output control unit 143 preferably does not attach Prefix to the readout result of the text Tx-10 so that the readout of the text Tx-10 can be completed earlier.

As illustrated in FIG. 8, in a predetermined section of the utterance volume (in a section where the utterance volume is larger than the threshold value for utterance volume determination in the example illustrated in FIG. 8), in a case where the utterance length is shorter than the threshold value for utterance length determination as compared with the case where the utterance length is longer than the threshold value for utterance length determination, the accuracy of the speech recognition processing is considered to be lower. Thus, in such a case, the output control unit 143 preferably attaches Prefix to the readout result of the text Tx-10 so that the user U1 can easily get to know the readout result of the text Tx-10.

Moreover, although not illustrated, the utterance clarity may be handled in a similar manner to the utterance volume and the utterance length. In other words, as described above, in a case where the utterance clarity is smaller than the threshold value for utterance clarity determination as compared with the case where the utterance clarity is larger than the threshold value for utterance clarity determination, the accuracy of the speech recognition processing is considered to be lower. Thus, in such a case, the output control unit 143 preferably attaches Prefix to the readout result of the text Tx-10 so that the user U1 can easily get to know the readout result of the text Tx-10. On the other hand, in the case where the utterance clarity is larger than the threshold value for utterance clarity determination, the output control unit 143 preferably does not attach Prefix to the readout result of the text Tx-10 so that the readout of the text Tx-10 can be completed earlier.

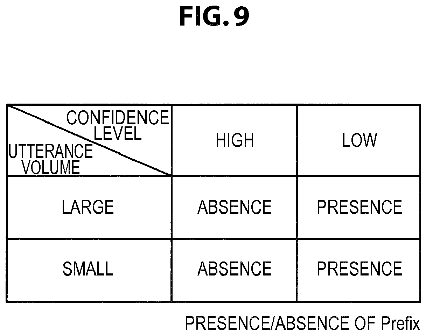

Further, the information related to the accuracy of the speech recognition processing may include the confidence level of the result of the speech recognition processing. FIG. 9 is a diagram illustrating an example of the speech output speed corresponding to the confidence level and the utterance volume. As illustrated in FIG. 9, in a case where the confidence level is lower than the threshold value for confidence level determination as compared with the case where the confidence level is higher than the threshold value for confidence level determination, the accuracy of the speech recognition processing is considered to be lower. Thus, in such a case, the output control unit 143 preferably attaches Prefix to the readout result of the text Tx-10 so that the user U1 can easily get to know the readout result of the text Tx-10. On the other hand, in the case where the confidence level is higher than the threshold value for confidence level determination, the output control unit 143 preferably does not attach Prefix to the readout result of the text Tx-10 so that the readout of the text Tx-10 can be completed earlier.

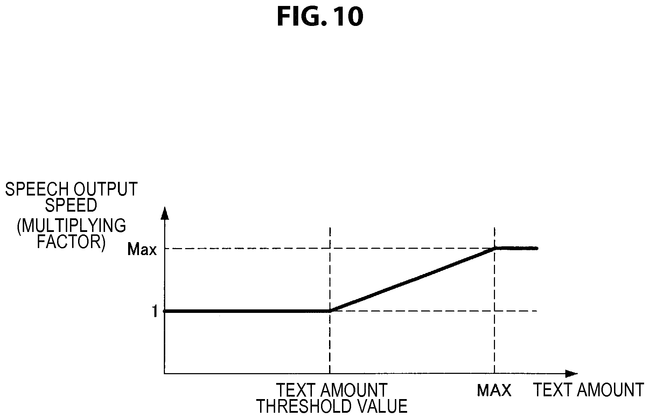

Further, the information related to the accuracy of the speech recognition processing may include the amount of the text Tx-10. FIG. 10 is a diagram illustrating an example of the relationship between the amount of text Tx-10 and the speech output speed. In one example, in a case where the amount of the text Tx-10 is larger than a predetermined threshold value of text amount as compared with the case where the amount of the text Tx-10 is smaller than the predetermined threshold value of text amount, it is considered that the readout takes a lot of time, so it is difficult for the user U1 to determine whether the text Tx-10 is normal. Thus, in such a case, as illustrated in FIG. 10, the output control unit 143 preferably reduces the time taken for the readout by increasing the speech output speed as the amount of the text Tx-10 increases.

In the example illustrated in FIG. 10, the speech output speed is indicated depending on how many times higher the speech output speed is than the readout speed by setting the normal readout speed of the text Tx-10 by the output control unit 143 as a reference. However, the readout speed that is being a reference is not limited to this case. In one example, the readout speed that is being a reference may be the readout speed in consideration of the utterance speed of the user U1. Alternatively, the readout speed that is being a reference may be a readout speed that takes into consideration the frequency at which the user U1 interacts with each other by chat. In addition, the speech output speed is not limited to how many times higher the speech output speed is than the readout speed as a reference.

Further, it is considered that a skill level of the utterance by the user U1 changes depending on the frequency at which the user U1 interacts with other users by chat, and the accuracy of the speech recognition processing also changes depending on a change in skill levels of the utterance. Thus, the output control unit 143 may control the speech output mode on the basis of the frequency at which the user U1 interacts with other users by chat (execution frequency of the speech recognition processing).

In one example, the output control unit 143 may control the speech output speed of the readout result of the text Tx-10 on the basis of the frequency at which the user U1 interacts with other users by chat (the execution frequency of the speech recognition processing). In one example, the output control unit 143 may decrease the speech output speed of the readout result of the text Tx-10 as the frequency at which the user U1 interacts with other users by chat (the execution frequency of the speech recognition processing) is larger.

Alternatively, the output control unit 143 may control the type of Prefix depending on the frequency at which the user U1 interacts with other users by chat (the execution frequency of the speech recognition processing). In one example, in a case where the frequency at which the user U1 interacts with other users by chat (the execution frequency of the speech recognition processing) is smaller than a threshold value for execution frequency determination, the output control unit 143 preferably attaches Prefix to the readout result of the text Tx-10. On the other hand, in a case where the frequency at which the user U1 interacts with other users by chat (the execution frequency of the speech recognition processing) is larger than the threshold value for execution frequency determination, the output control unit 143 preferably does not attach Prefix to the readout result of the text Tx-10.

In the above, the description is given of the example in which the speech output mode of the readout result of the text Tx-10 is controlled on the basis of the information related to the accuracy of the speech recognition processing. However, the output control unit 143 may control the speech output mode on the basis of the type of content using the text Tx-10. In one example, in a case where the content using the text Tx-10 is Web content, there is a possibility that the readout result of the text Tx-10 is necessary to be larger as compared with the case where the content using the text Tx-10 is a chat application (e.g., in a case where a search corresponding to the text Tx-10 is performed in the Web content, the accuracy of the speech recognition processing is necessary to be higher), so the output control unit 143 preferably reduces the speech output speed of the readout result of Tx-10.

Further, the output control unit 143 may control the speech output mode on the basis of information related to the user U1. Here, the information related to the user U1 is not particularly limited, but may include at least one of behavior information of the user U1, posture information of the user U1, setting information by the user U1, environmental information around the user U1, biometric information of the user U1, and emotion information of the user U1. Moreover, in the following, the biometric information of the user U1 and the emotion information of the user U1 are directly used, but the biometric information and the emotion information of the user U1 may be converted once into the degree of concentration of the user U1 to be used as the degree of concentration of the user U1.

Here, the behavior information of the user U1 is not particularly limited. In one example, in a case where it is possible to acquire position information of the user U1, the behavior information of the user U1 is a behavior recognition result of the user U1 that is obtained by analyzing the position information of the user U1 (e.g., stationary state, walking state, running state, stair climbing state, and car driving state), or may be a moving speed of the user U1 that is obtained by analyzing the position information of the user U1.

In an example, it is considered that the utterance is normally performed and the accuracy of the speech recognition processing is increased in the state where the user U1 is stationary and in the state where the user U1 is walking, so the output control unit 143 preferably causes the readout result of the text Tx-10 not to be output. On the other hand, in the state in which the user U1 is running, it is considered that the utterance is not performed normally and the accuracy of the speech recognition processing is decreased, so the output control unit 143 preferably causes the readout result of the text Tx-10 to be output.

If an accelerometer is attached to the body of the user U1, the posture information of the user U1 is acquired on the basis of acceleration detected by the accelerometer. In an example, it is considered that the utterance is not normally performed and the accuracy of the speech recognition processing is decreased as the posture of the user U1 tilts more and more. Thus, in a case where the inclination of the posture of the user U1 is more than an inclination for posture determination, the output control unit 143 may cause the readout result of the text Tx-10 to be output. On the other hand, in a case where the inclination of the posture of the user U1 is not more than the inclination for posture determination, the output control unit 143 preferably causes the readout result of the text Tx-10 not to be output.

The setting information by the user U1 is set on the basis of a predetermined speech output mode changing operation when this speech output mode changing operation is selected by the user U1 and is input with the operation input unit 115. The speech output mode changing operation is not particularly limited, but it may be, in one example, an operation of selecting a speech output mode changing button (not shown).

The environmental information around the user U1 may be obtained by analyzing an image that is input by the image input unit 110, or may be obtained by analyzing the sound information collected by the sound collection unit 120. In one example, the environmental information around the user U1 may be information indicating whether a person exists around the user U1. In this event, in a case where there is a person around the user U1, there is a possibility that the user U1 wishes to complete the readout of the text Tx-10 earlier as compared with the case where no person exists around the user U1, so the output control unit 143 preferably increase the speech output speed.

Further, in one example, the environmental information around the user U1 may be the illuminance around the user U1. In this event, in a case where the illuminance around the user U1 is lower than a threshold value for illuminance determination, the visual recognition of the text Tx-10 is likely to be difficult, so the output control unit 143 preferably cause the readout result of the text Tx-10 to be output. On the other hand, in a case where the illuminance around the user U1 is higher than the threshold value for illuminance determination, the text Tx-10 is likely to be recognized visually, so the output control unit 143 preferably causes the readout result of the text Tx-10 not to be output.

The biological information of the user U1 may be obtained in any way. In an example, the biological information of the user U1 may be input through the biometric information input unit 118. The biometric information of the user U1 that is input through the biometric information input unit 118 is not particularly limited and may include at least one of gripping force applied to the controller by the user U1, perspiration of the user U1, and heartbeat of the user U1. In addition, the biometric information of the user U1 includes at least one of body temperature, respiratory rate, blink frequency, eye movement, fixation duration, size of pupil diameter, blood pressure, brain wave, body motion, body posture, skin temperature, galvanic skin resistance, micro-vibration (MV), myoelectric potential, and SpO2 (blood oxygen saturation level) of the user U1.

In an example, in a case where the gripping force is smaller than a threshold value for the gripping force determination, it is considered that the utterance is performed normally and the accuracy of the speech recognition processing is increased, so the output control unit 143 preferably causes the readout result of the text Tx-10 not to be output. On the other hand, in a case where the gripping force is larger than the threshold value for the gripping force determination, it is considered that the utterance is not normally performed and the accuracy of the speech recognition processing is decreased, so the output control unit 143 preferably causes the readout result of the text Tx-10 to be output.

In another example, in a case where the perspiration is smaller than a threshold value for perspiration determination, it is considered that the utterance is normally performed and the accuracy of the speech recognition processing is increased, so the output control unit 143 preferably causes the readout result of the text Tx-10 not to be output. On the other hand, in a case where the perspiration is larger than the threshold value for perspiration determination, it is considered that the utterance is not normally performed and the accuracy of the speech recognition processing is decreased, so the output control unit 143 preferably causes the readout result of the text Tx-10 to be output.

In another example, in a case where the heartbeat is smaller than a threshold value for heartbeat determination, it is considered that the utterance is normally performed and the accuracy of the speech recognition processing is increased, so the output control unit 143 preferably causes the readout result of the text Tx-10 not to be output. On the other hand, in a case where the heartbeat is larger than the threshold value for heartbeat determination, it is considered that the utterance is not normally performed and the accuracy of the speech recognition processing is decreased, so the output control unit 143 preferably causes the readout result of the text Tx-10 to be output.

The emotion information of the user U1 may be obtained in any way. In one example, the emotion information of the user U1 may be obtained by analyzing the sound information or the input image by the output control unit 143. In addition, the emotion information of the user U1 is not limited to a particular one, and may include at least one of joy, surprise, and anger of the user U1. Alternatively, the emotion information of the user U1 may include other emotions.

In one example, in a case where the emotion information of the user U1 indicates any of human emotions, it is considered that the utterance is not normally performed and the accuracy of the speech recognition processing is decreased, so the output control unit 143 preferably causes the readout result of the text Tx-10 to be output. On the other hand, in a case where the emotion information of the user U1 does not indicate any of human emotions, it is considered that the utterance is normally performed and the accuracy of the speech recognition processing is increased, so the output control unit 143 preferably causes the readout result of the text Tx-10 not to be output.

Meanwhile, in a case where it is not necessarily for the output control unit 143 to cause the output unit 144 to output the readout result of the text Tx-10 and a predetermined condition is satisfied, the output control unit 143 may control the output unit 144 in such a manner that the output unit 144 is prevented from outputting the readout result of the text Tx-10 in the form of speech. On the other hand, in a case where the predetermined condition is not satisfied, the output control unit 143 may control the output unit 144 in such a manner that the output unit 144 outputs the readout result of the text Tx-10 in the form of speech.

Here, the predetermined condition is not particularly limited. In one example, the predetermined condition may include at least one of a condition related to the line of sight of the user U1, a condition related to the position of the user U1, a font size (display size) of the text Tx-10, and a condition related to the confidence level of the text Tx-10. The position of the user U1 may be the eye position of the user U1, and the distance from the eye position of the user U1 to the predetermined position on the recognition result screen 133 (hereinafter also referred to as "viewing distance") is obtained by analyzing the image that is input by the input unit 110. The line of sight of the user U1 is also obtained by analyzing the image that is input by the image input unit 110.

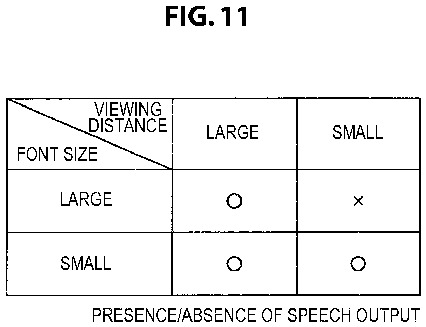

FIG. 11 is a diagram illustrating an example of the presence or absence of speech output corresponding to the font size and the viewing distance of the text Tx-10. In one example, in a case where the font size of the text Tx-10 is smaller than a threshold value for font size determination as compared with a case where the font size of the text Tx-10 is larger than the threshold value for font size determination, the degree of accuracy of the speech recognition processing is considered to be lower. Thus, in such a case, the output control unit 143 preferably causes the readout result of the text Tx-10 to be output. On the other hand, in the case where the font size of the text Tx-10 is larger than the threshold value for font size determination, the output control unit 143 preferably causes the readout result of the text Tx-10 not to be output.

Further, in one example, in a case where the viewing distance to a predetermined position on the recognition result screen 133 is larger than a predetermined distance as compared with a case where the viewing distance to the predetermined position on the recognition result screen 133 is smaller than the predetermined distance, the necessity for the user U1 to listen to the readout result of the text Tx-10 is considered to be lower. On the other hand, in a case where the viewing distance to the predetermined position on the recognition result screen 133 is larger than the predetermined distance, the necessity for the user U1 to listen to the readout result of the text Tx-10 is considered to be higher.

Thus, in a case where the viewing distance to the predetermined position on the recognition result screen 133 is larger than the predetermined distance, the output control unit 143 preferably causes the readout result of the text Tx-10 not to be output. On the other hand, in a case where the viewing distance to the predetermined position on the recognition result screen 133 is smaller than the predetermined distance, the output control unit 143 preferably causes the readout result of the text Tx-10 to be output. Moreover, the predetermined position on the recognition result screen 133 is not limited, but it may be the center position of the recognition result screen 133.

As illustrated in FIG. 11, in a predetermined section of the font size (in a section where the font size is larger than a threshold value for font size determination in the example illustrated in FIG. 11), in a case where the viewing distance is larger than the threshold value for viewing distance determination as compared with the case where the viewing distance is smaller than the threshold value for viewing distance determination, the accuracy of the speech recognition processing is considered to be decreased. Thus, in such a case, the output control unit 143 preferably output the readout result of the text Tx-10 so that the user U1 can get to know the readout result of the text Tx-10. On the other hand, in the case where the viewing distance is smaller than the threshold value for viewing distance determination, the output control unit 143 preferably causes the readout result of the text Tx-10 not to be output.

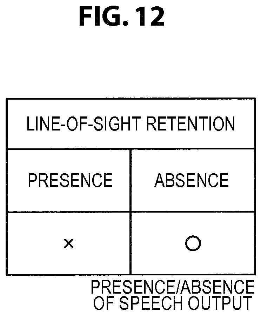

FIG. 12 is a diagram illustrating an example of the presence or absence of speech output corresponding to the presence or absence of a line-of-sight retention. In one example, in a case where the line of sight of the user U1 retains in the recognition result screen 133 beyond a predetermined time, the necessity for the user U1 to listen to the readout result of the text Tx-10 is considered to be lower. On the other hand, in a case where the line of sight of the user U1 does not retain in the recognition result screen 133 beyond the predetermined time, the necessity for the user U1 to listen to the readout result of the text Tx-10 is considered to be higher.

Thus, as illustrated in FIG. 12, in the case where the line of sight of the user U1 retains in the recognition result screen 133, the output control unit 143 preferably causes the readout result of the text Tx-10 not to be output. On the other hand, in the case where the line of sight of the user U1 does not retain in the recognition result screen 133, the output control unit 143 preferably causes the readout result of the text Tx-10 to be output. Moreover, here, the determination of whether the line of sight retains in the recognition result screen 133 is performed, but determination whether the line of sight retains in a predetermined region may be performed by setting the recognition result screen 133 as a reference.

Further, the predetermined condition may include at least one of a condition in which an operation used to instruct the speech recognition processing to be reactivated by the user U1 is input and a condition in which an operation used to instruct the text Tx-10 to be transmitted is input. The operation used to instruct the speech recognition processing to be reactivated is not particularly limited, but may be a press and hold operation of the speech recognition processing start button 132. In addition, the operation, which is used to instruct the text Tx-10 to be transmitted, may be the recognition end operation described above.

In the above, the description is given of the case where the speech output mode includes the speech output speed of the readout result of the text Tx-10 and the case of including the type of the output speech that is output before outputting the readout result of the text Tx-10 in the form of speech. However, the speech output mode is not limited to these cases. In one example, the speech output mode may include the magnitude of the speech output of the readout result of the text Tx-10.

In one example, in the case where the noise volume is larger than the threshold value for noise volume determination as compared with the case where the noise volume is smaller than the threshold value for noise volume determination, the output control unit 143 preferably increases the speech output of the readout result of the text Tx-10 so that the user U1 can easily get to know the readout result of the text Tx-10. On the other hand, in the case where the noise volume is smaller than the threshold value for noise volume determination as compared with the case where the noise volume is larger than the threshold value for noise volume determination, the output control unit 143 preferably decreases the speech output of the readout result of the text Tx-10.

Further, in the case where the utterance volume is smaller than the threshold value for utterance volume determination as compared with the case where the utterance volume is larger than the threshold value for utterance volume determination, the output control unit 143 preferably increases the speech output of the readout result of the text Tx-10 so that the user U1 can easily get to know the readout result of the text Tx-10. On the other hand, in the case where the utterance volume is larger than the threshold value for utterance volume determination as compared with the case where the utterance volume is smaller than the threshold value for utterance volume determination, the output control unit 143 preferably decreases the speech output of the readout result of the text Tx-10.

Further, in the case where the utterance length is shorter than the threshold value for utterance length determination as compared with the case where the utterance length is longer than the threshold value for utterance length determination, the output control unit 143 preferably increases the speech output of the readout result of the text Tx-10 so that the user U1 can easily get to know the readout result of the text Tx-10. On the other hand, in the case where the utterance length is longer than the threshold value for utterance length determination as compared with the case where the utterance length is shorter than the threshold value for utterance length determination, the output control unit 143 preferably decreases the speech output of the readout result of the text Tx-10.

Further, in the case where the utterance clarity is lower than the threshold value for utterance clarity determination as compared with the case where the utterance clarity is higher than the threshold value for utterance clarity determination, the output control unit 143 preferably increases the speech output of the readout result of the text Tx-10 so that the user U1 can easily get to know the readout result of the text Tx-10. On the other hand, in the case where the utterance clarity is higher than the threshold value for utterance clarity determination as compared with the case where the utterance clarity is lower than the threshold value for utterance clarity determination, the output control unit 143 preferably decreases the speech output of the readout result of the text Tx-10.

Further, in a case where the confidence level is lower than the threshold value for confidence level determination as compared with the case where the confidence level is higher than the threshold value for confidence level determination, the output control unit 143 preferably makes the user U1 easier to get to know the readout result of the text Tx-10 by making the speech output of the readout result of the text Tx-10 larger. On the other hand, in a case where the confidence level is higher than the threshold value for confidence level determination as compared with the case where the confidence level is lower than the threshold value for confidence level determination, the output control unit 143 preferably makes the speech output of the readout result of the text Tx-10 smaller.

Further, the speech output mode may include the sound quality of the readout result of the text Tx-10. Here, the sound quality of the readout result of the text Tx-10 may be controlled in any way. In an example, the output control unit 143 may control the sound quality of the readout result of the text Tx-10 depending on the sound that is output from an application (e.g., a game application) being executed by the control unit 140.

The above description is given of the function of causing the user U1 listening to the readout result of the text Tx-10 to get to know the accuracy of the speech recognition processing.

### [1.3.2. Various input modes]

Meanwhile, the above description is given of the case where the text obtained as the result of the speech recognition processing is inputted in a format without any modification. However, in some cases, the user may wish to convert the text obtained as the result of the speech recognition processing into another format and then to input it. In one example, in some cases, the user may wish to input a symbol, which is converted from the text obtained as the result of the speech recognition processing. In addition, in some cases, the user may wish to input a command, which is converted from text obtained as the result of the speech recognition processing.

A mode in which the text obtained as the result of the speech recognition processing is input in a format without any modification is referred to as a "text input mode" hereinafter. In addition, a mode in which a symbol converted from the text obtained as the result of speech recognition processing is input is referred to as "symbol input mode". In addition, a mode in which a command converted from the text obtained as the result of speech recognition processing is input is referred to as "command input mode". Moreover, in the text input mode, the control of the speech output mode of the result of the speech recognition processing based on the information related to the accuracy of the speech recognition processing as described above may be performed. In the symbol and command input modes, the speech output of the result of the speech recognition processing can be performed or may be not necessarily performed.

In these cases, in a case where each of the input modes (text input mode, symbol input mode, and command input mode) is started by selecting an object displayed by the display unit 130, the necessity to move the user's viewpoint to the displayed object may give trouble to users. In the following, the description is given of a technology that makes it easier to start each of the input modes.

In one example, the start of the input mode is executed upon the detection of a predetermined input start trigger. The input start trigger may be the end of the speech recognition processing on the sound information or, in a case where the operation input unit 115 is provided with a back button, it may be an operation of depressing the back button. Alternatively, in a case where the operation input unit 115 is provided with a touchpad, the input mode may be started by an operation of touching a predetermined position on the touchpad, an operation of tilting the operation input unit 115 beyond a predetermined angle, or a press and hold operation of the button of the operation input unit 115.

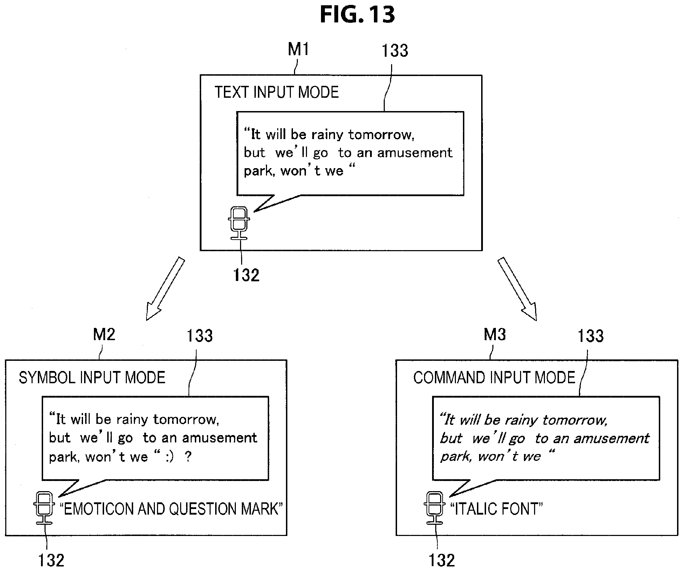

Further, the input mode may be started upon the detection of the input start trigger, or may be performed after the result of the speech recognition processing is obtained. FIG. 13 is a diagram illustrated to describe an overview of an example in which the input mode is started upon the detection of the input start trigger. It is first considered that there is a case where a text input start trigger for starting the text input mode is detected and the user makes a desired utterance. In such a case, the output control unit 143 causes the recognition result screen 133 to display the text obtained as the result of the speech recognition processing in a format without any modification (a text input mode M1).

Subsequently, it is considered that there is a case where a symbol input start trigger for starting the symbol input mode is detected and "emoticon and question mark" is uttered. In such a case, the output control unit 143 converts the text "emoticon and question mark" obtained as the result of the speech recognition processing into a symbol ":)?" and causes the recognition result screen 133 to display the symbol ":)?" (a symbol input mode M2).

On the other hand, it is considered that there is a case where a command input start trigger for starting the command input mode is detected and "italic font" is uttered. In such a case, the output control unit 143 inputs a command for converting a desired text obtained as the result of the speech recognition processing into "italic font", and causes the recognition result screen 133 to display the desired text that is converted into "italic font" (a command input mode M3).

Moreover, FIG. 13 illustrates an example in which the switching from the text input mode to the symbol input mode and the switching from the text input mode to the command input mode are performed. However, the switching between executable input modes is not limited to the example illustrated in FIG. 13. In one example, the switching between the input modes can be performed bidirectionally between any two input modes of the text input mode, the symbol input mode, and the command input mode.

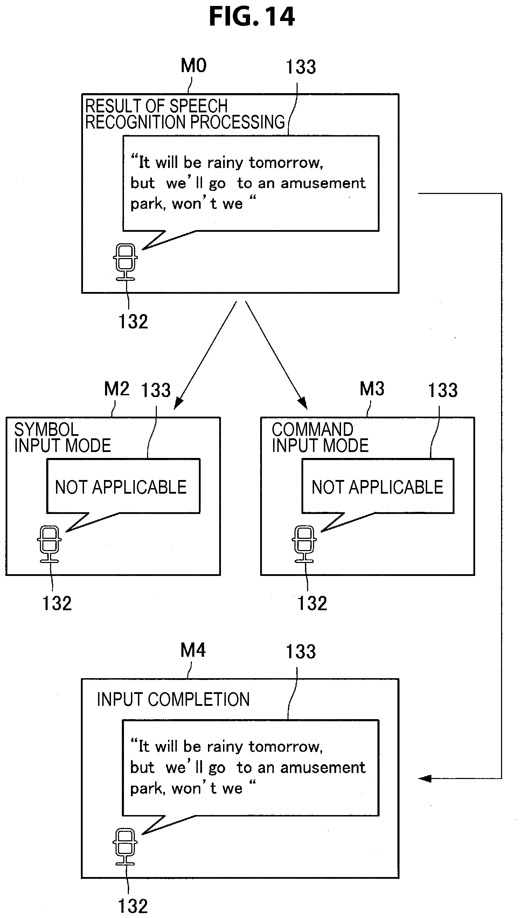

FIG. 14 is a diagram illustrated to describe a first overview of an example in which the input mode is started after the result of the speech recognition processing is obtained. It is first considered that there is a case where the text input start trigger is detected and the user makes a desired utterance in the text input mode. In such a case, the speech recognition unit 142 performs the speech recognition processing on the desired utterance, and the output control unit 143 causes the text obtained as the result of the speech recognition processing to be displayed on the recognition result screen 133 in a format without any modification (a speech recognition processing result M0).

In this event, it is considered that there is a case where the user determines that conversion of the text obtained as the result of the speech recognition processing into a symbol and a command is not necessary to be performed. In such a case, when the text input start trigger is detected, the output control unit 143 settles the text obtained as the result of the speech recognition processing without any modification (an input completion M4).

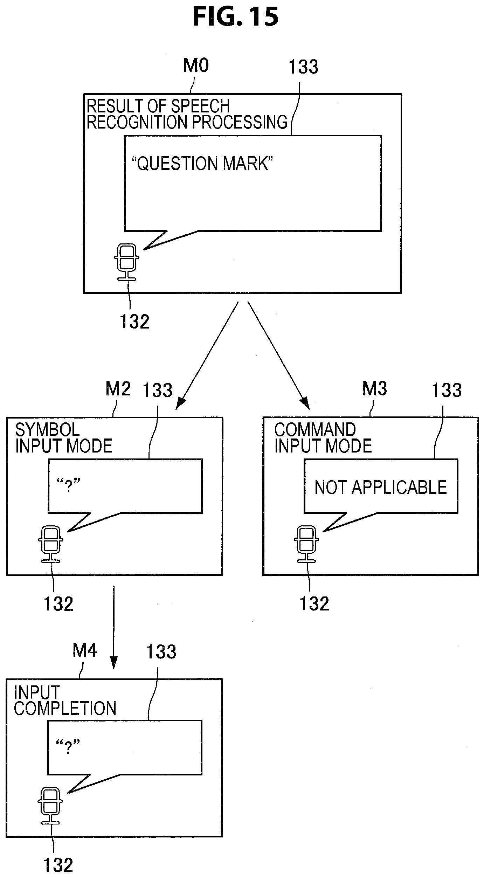

FIG. 15 is a diagram illustrated to describe a second overview of an example in which the switching between the input modes is performed after the result of the speech recognition processing is obtained. It is considered that there is the case where the text input start trigger is detected and the user makes a desired utterance in the text input mode, which is similar to the example illustrated in FIG. 14. In such a case, the speech recognition unit 142 performs the speech recognition processing on the desired utterance, and the output control unit 143 causes the text obtained as the result of the speech recognition processing to be displayed on the recognition result screen 133 in a format without any modification (the speech recognition processing result M0).

In this event, it is considered that there is a case where the user wishes to convert the text obtained as the result of the speech recognition processing into a symbol. In such a case, when the symbol input start trigger is detected, the output control unit 143 converts the text obtained as the result of the speech recognition processing into a symbol corresponding to the text (the symbol input mode M2). Then, the output control unit 143 settles the symbol converted from the text (the input completion M4). Moreover, the input mode can also be switched to the command input mode instead of the symbol input mode.

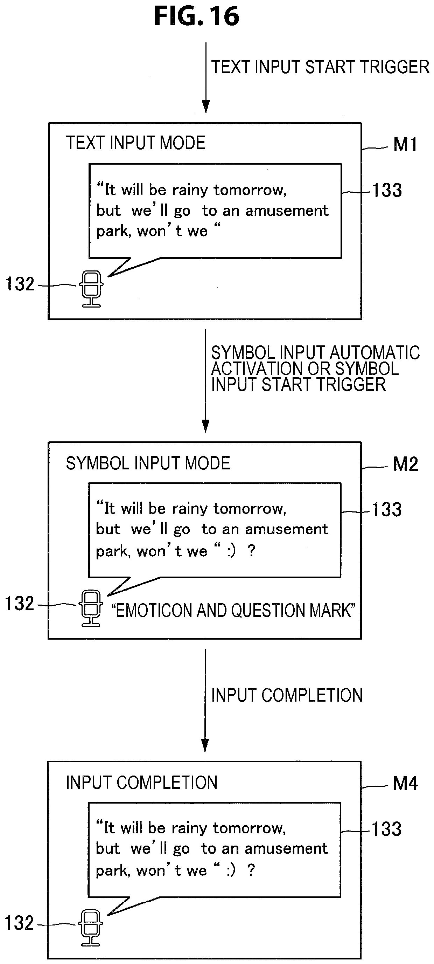

FIG. 16 is a diagram illustrated to describe an example in which the symbol input mode is activated after the text input mode. It is first considered that there is a case where the text input start trigger is detected and the user makes a desired utterance in the text input mode. In such a case, the output control unit 143 causes the text obtained as the result of the speech recognition processing to be displayed in a format without any modification on the recognition result screen 133 (the text input mode M1).

Subsequently, in the case where the speech recognition processing is completed, the output control unit 143 automatically activates the symbol input mode. Alternatively, in the case where a predetermined symbol input start trigger is detected, the output control unit 143 activates the symbol input mode. Here, it is considered that the symbol input start trigger is the same as the text input start trigger, but the symbol input start trigger may be different from the text input start trigger.

Subsequently, it is considered that the user makes an utterance "emoticon and question mark". In such a case, the output control unit 143 converts the text "emoticon and question mark" obtained as the result of the speech recognition processing into the symbol ":)?", and causes the symbol ":)?" to be displayed on the recognition result screen 133 (the symbol input mode M2). In this symbol, :) is a smiley-face emoticon. Then, when a predetermined speech recognition end trigger is detected, the output control unit 143 settles the text obtained as the result of the speech recognition processing and the symbol ":)?" (the input completion M4). Here, it is considered that the speech recognition end trigger is the same as the text input start trigger, but the speech recognition end trigger may be different from the text input start trigger.

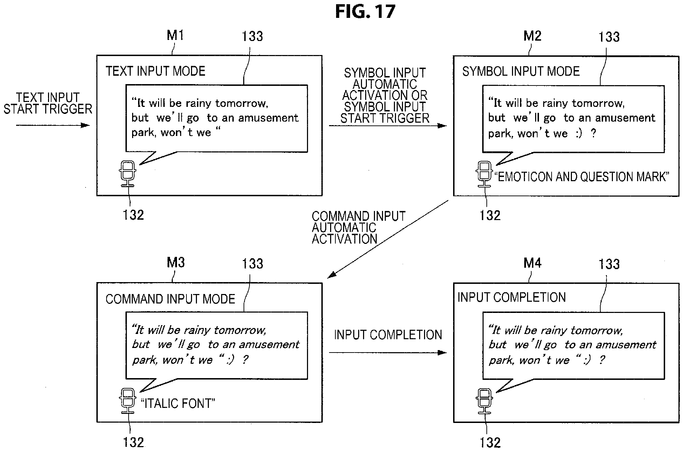

FIG. 17 is a diagram illustrated to describe an example in which the symbol and command input modes are activated after the text input mode. As in the example illustrated in FIG. 16, the text obtained as the result of the speech recognition processing is displayed in a format without any modification on the recognition result screen 133 (the text input mode M1), and the symbol ":)?" that is converted from the text "emoticon and question mark" obtained as the result of the speech recognition processing is displayed on the recognition result screen 133 (the symbol input mode M2).

Subsequently, in the case where the speech recognition processing is completed, the output control unit 143 automatically activates the command input mode. Alternatively, in the case where a predetermined command input start trigger is detected, the output control unit 143 starts the command input mode. Here, it is considered that the command input start trigger is the same as the text input start trigger, but the command input start trigger may be different from the text input start trigger.

Subsequently, it is considered that the user utters an "italic font". In such a case, the output control unit 143 inputs a command for converting the desired text obtained as the result of the speech recognition processing and the symbol ":)?" into "italic font", and causes the text that is converted into the "italic font" to be displayed on the recognition result screen 133 (the command input mode M3). Then, when the predetermined speech recognition end trigger is detected, the output control unit 143 settles the "italic font" of the desired text obtained as the result of the speech recognition processing and the symbol ":)?" (the input completion M4).

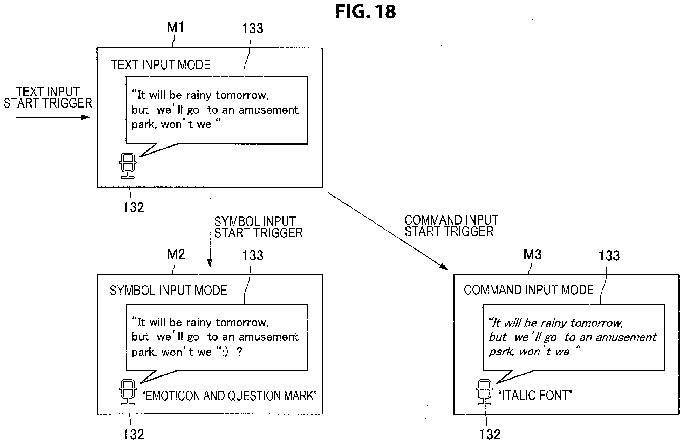

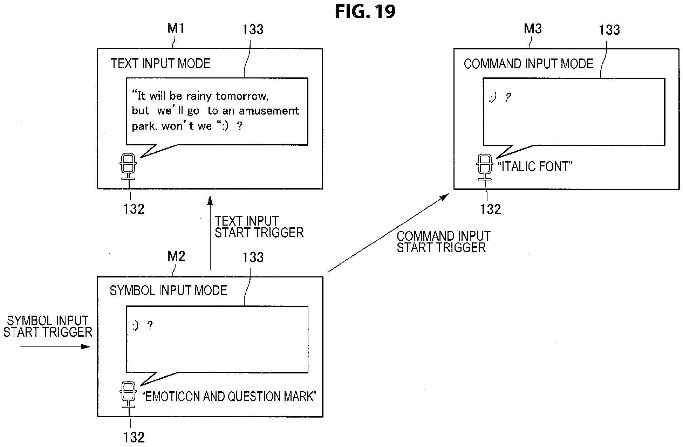

FIGS. 18 and 19 are diagrams illustrated to describe an example in which the text input mode or the symbol input mode is initially activated. As illustrated in FIG. 18, it is considered that the text input start trigger is detected and the user makes a desired utterance in the text input mode. In such a case, the speech recognition unit 142 performs the speech recognition processing on the desired utterance, and the output control unit 143 causes the text obtained as the result of the speech recognition processing to be displayed in a format without any modification on the recognition result screen 133 (the text input mode M1).

In this event, it is considered that there is a case where the user wishes to convert the text obtained as the result of the speech recognition processing into a symbol. In such a case, when the symbol input start trigger is detected, the output control unit 143 converts the text obtained as the result of the speech recognition processing into a symbol corresponding to the text (the symbol input mode M2). On the other hand, it is considered that there is a case where the user wishes to convert the text obtained as the result of the speech recognition processing into a command. In such a case, the command input start trigger is detected, the output control unit 143 inputs a command corresponding to the text obtained as the result of the speech recognition processing (the command input mode M3).

Further, as illustrated in FIG. 19, it is considered that the symbol input start trigger is detected and the user makes a desired utterance in the symbol input mode. In such a case, the speech recognition unit 142 performs the speech recognition processing on the desired utterance, and the output control unit 143 converts the text obtained as the result of the speech recognition processing into a symbol and causes the symbol to be displayed on the recognition result screen 133 (the symbol input mode M2).

In this event, it is considered that the user wishes to input text. In such a case, when the text input start trigger is detected and the user makes a desired utterance in the text input mode, the speech recognition unit 142 performs the speech recognition processing on the desired utterance, and the output control unit 143 causes the text obtained as the result of the speech recognition processing to be displayed on the recognition result screen 133 (the text input mode M1). On the other hand, it is considered that the user wishes to input a command and the user utters "italic font". In such a case, the command input start trigger is detected, the output control unit 143 causes the symbol converted into "italic font" to be displayed on the recognition result screen 133 (the command input mode M3).

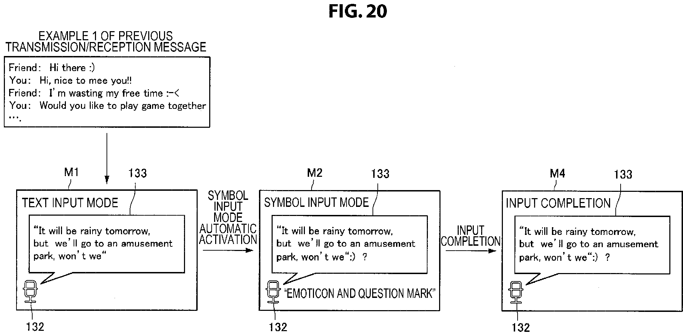

Further, the output control unit 143 may control whether to automatically activate the symbol input mode on the basis of contents of a message (a result of the speech recognition processing) transmitted or received previously. FIG. 20 is a diagram illustrated to describe an example of automatically activating the symbol input mode on the basis of the contents of the message transmitted or received previously. As illustrated in FIG. 20, it is considered that the message transmitted or received previously includes four symbols (two emoticons and two exclamation marks) and the subsequent symbol input is estimated to be more likely to be performed.

Here, it is considered that the text input start trigger is detected and the user makes a desired utterance in the text input mode. In such a case, the speech recognition unit 142 performs the speech recognition processing on the desired utterance, and the output control unit 143 causes the text obtained as the result of the speech recognition processing to be displayed in a format without any modification on the recognition result screen 133 (the text input mode M1). Subsequently, the output control unit 143 estimates that the subsequent symbol input is more likely to be performed on the basis of the message previously transmitted or received and automatically activates the symbol input mode.

Subsequently, it is considered that the user utters "emoticon and question mark". In such a case, the output control unit 143 converts the text "emoticon and question mark" obtained as the result of the speech recognition processing into the symbol ":)?", and causes the symbol ":)?" to be displayed on the recognition result screen 133 (the symbol input mode M2). Then, when the predetermined speech recognition end trigger is detected, the output control unit 143 settles the text obtained as the result of the speech recognition processing and the symbol ":)?" (the input completion M4). Here, it is considered that the speech recognition end trigger is the same as the text input start trigger, but the speech recognition end trigger may be different from the text input start trigger.

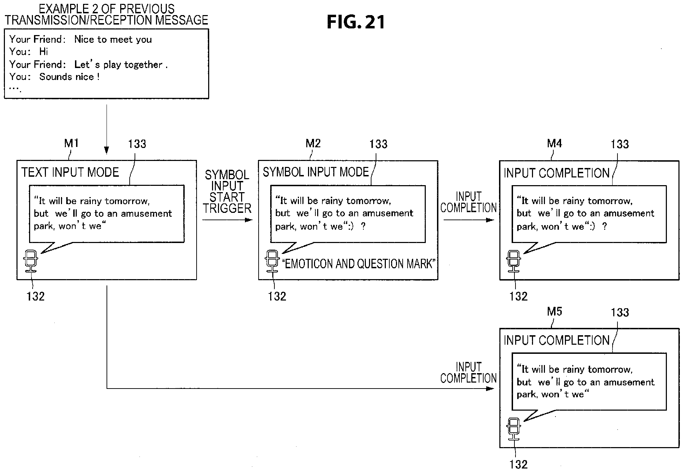

FIG. 21 is a diagram illustrated to describe an example in which the symbol input mode is not automatically activated on the basis of the contents of the message transmitted or received previously. As illustrated in FIG. 21, it is considered that the message transmitted or received previously includes only one symbol (only one exclamation mark is included as a symbol), and the subsequent symbol input is estimated to be less likely to be performed.

Here, it is considered that the text input start trigger is detected and the user makes a desired utterance in the text input mode. In such a case, the speech recognition unit 142 performs the speech recognition processing on the desired utterance, and the output control unit 143 causes the text obtained as the result of the speech recognition processing to be displayed in a format without any modification on the recognition result screen 133 (the text input mode M1). Subsequently, the output control unit 143 estimates that the subsequent symbol input is less likely to be performed on the basis of the message previously transmitted or received and does not automatically activate the symbol input mode.

Subsequently, when the predetermined speech recognition end trigger is detected, the output control unit 143 settles the text obtained as the result of the speech recognition processing (an input completion M5). Here, it is considered that the speech recognition end trigger is the same as the text input start trigger, but the speech recognition end trigger may be different from the text input start trigger.

On the other hand, it is considered that the symbol input start trigger is detected and the user utters "emoticon and question mark". In such a case, the output control unit 143 converts the text "emoticon and question mark" obtained as the result of the speech recognition processing into the symbol ":)?", and causes the symbol ":)?" to be displayed on the recognition result screen 133 (the symbol input mode M2). Then, when the predetermined speech recognition end trigger is detected, the output control unit 143 settles the text obtained as the result of the speech recognition processing and the symbol ":)?" (the input completion M4). Here, it is considered that the speech recognition end trigger is the same as the text input start trigger, but the speech recognition end trigger may be different from the text input start trigger.

Moreover, there is no particular limitation on a method of determining whether to automatically activate the symbol input mode on the basis of the contents of the message transmitted or received previously. In one example, the output control unit 143 may determine whether to automatically activate the activation input mode, depending on whether the amount of symbols included in the message transmitted or received during a predetermined period exceeds a threshold value. Alternatively, the output control unit 143 may determine whether to automatically activate the symbol input mode by applying statistical processing such as machine learning to the message transmitted or received during the predetermined period.

Further, here, the output control unit 143 determines whether to automatically activate the symbol input mode on the basis of the contents of the transmitted or received message. However, the output control unit 143 may not necessarily determine whether to automatically activate the symbol input mode on the basis of the contents of both the transmitted message and the received message. Specifically, the output control unit 143 may determine whether to automatically activate the symbol input mode on the basis of only the contents of the transmitted message, or may determine whether to automatically activate the symbol input mode on the basis of only the contents of the received message.

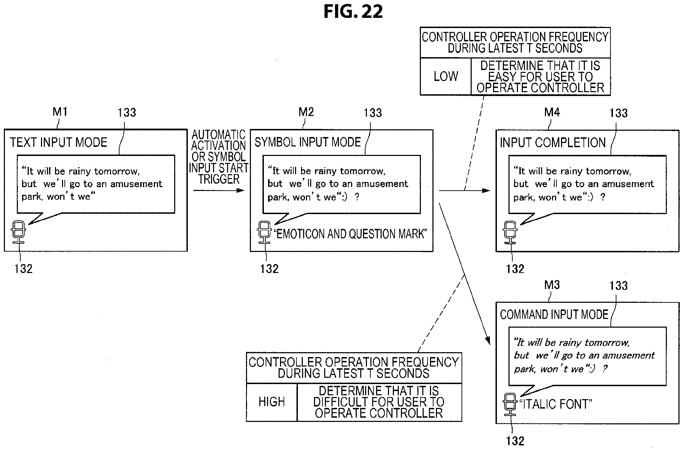

Further, the output control unit 143 may also control whether to automatically activate the command input mode on the basis of the operation frequency of the operation input unit 115, for example, a controller of a game console. FIG. 22 is a diagram illustrated to describe an example of controlling whether to automatically activate the command input mode on the basis of the operation frequency of the controller. As illustrated in FIG. 22, it is considered that there is a case where the controller operation frequency during the latest T seconds exceeds a threshold value and a case where the controller operation frequency during the latest T seconds does not exceed the threshold value.

Here, it is considered that the text input start trigger is detected and the user makes a desired utterance in the text input mode. In such a case, the speech recognition unit 142 performs the speech recognition processing on the desired utterance, and the output control unit 143 causes the text obtained as the result of the speech recognition processing to be displayed in a format without any modification on the recognition result screen 133 (the text input mode M1). Subsequently, the output control unit 143 activates the symbol input mode in the case where the symbol input start trigger is detected or activates the symbol input mode automatically.

Subsequently, it is considered that the user utters "emoticon and question mark". In such a case, the output control unit 143 converts the text "emoticon and question mark" obtained as the result of the speech recognition processing into the symbol ":)?", and causes the symbol ":)?" to be displayed on the recognition result screen 133 (the symbol input mode M2).

Then, in the case where the controller operation frequency during the latest T seconds exceeds the threshold value, the output control unit 143 determines that it is difficult for the user to operate the controller and so automatically activates the command input mode. Here, it is considered that the user utters "italic font". In such a case, the output control unit 143 inputs a command for converting the desired text obtained as the result of the speech recognition processing and the symbol ":)?" into "italic font", and causes the desired text and the symbol ":)?" that are converted into an italic font to be displayed on the recognition result screen 133 (the command input mode M3).

On the other hand, in the case where the controller operation frequency during the latest T seconds does not exceed the threshold value, the output control unit 143 determines that it is easy for the user to operate the controller, and does not automatically activate the command input mode. Here, when the predetermined speech recognition end trigger is detected, the text obtained as the result of the speech recognition processing and the symbol ":)?" are settled (the input completion M4). Moreover, even when the command input mode is not automatically started, in the case where the command input start trigger is detected, the output control unit 143 preferably activates the command input mode.

Moreover, there is no particular limitation on a method of controlling whether to automatically activate the command input mode. In one example, the output control unit 143 may determine whether to automatically activate the command input mode on the basis of scene information of a game. In one example, in a case where the scene information of the game indicates that the load is being performed, the user does not necessarily concentrate so much on the game, so the output control unit 143 does not necessarily start the command input mode automatically. On the other hand, in a case where the scene information of the game indicates that the game is in battle, it is predicted that the user is concentrating on the game, so the output control unit 143 preferably starts the command input mode automatically.

Alternatively, the output control unit 143 may determine whether to automatically activate the command input mode on the basis of the concentration degree of the user. In one example, the output control unit 143 preferably automatically activates the command input mode in a case where the concentration degree exceeds a threshold value. On the other hand, in a case where the concentration degree does not exceed the threshold value, the output control unit 143 does not necessarily start automatically the command input mode. The concentration degree may be estimated on the basis of the user's line of sight, or may be estimated on the basis of the user's biological information (e.g., perspiration, heartbeat, etc.).

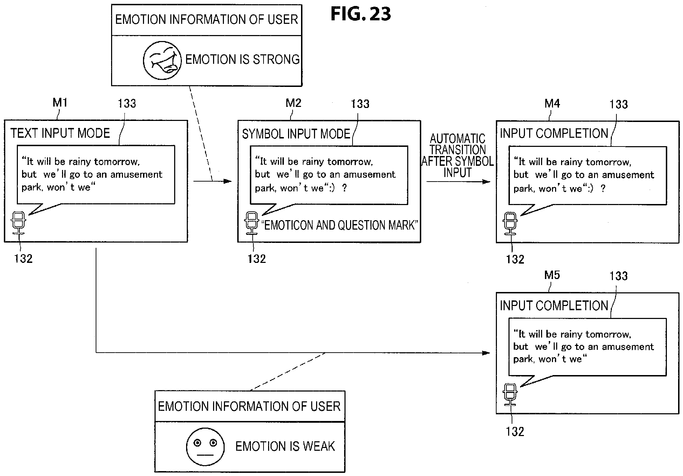

Further, the output control unit 143 may control whether to automatically activate the symbol input mode on the basis of the emotion information of the user. FIG. 23 is a diagram illustrated to describe an example of controlling whether to automatically activate the symbol input mode on the basis of the user's emotion information. As illustrated in FIG. 23, it is considered that there is a case where the emotion of the user is strong and a case where the emotion of the user is weak.

Here, it is considered that the text input start trigger is detected and the user makes a desired utterance in the text input mode. In such a case, the speech recognition unit 142 performs the speech recognition processing on the desired utterance, and the output control unit 143 causes the text obtained as the result of the speech recognition processing to be displayed in a format without any modification on the recognition result screen 133 (the text input mode M1).

In this event, in a case where it is determined that the emotion of the user is stronger than the threshold value, the output control unit 143 estimates that the subsequent symbol input is more likely to be performed and automatically activates the symbol input mode. Subsequently, it is considered that the user utters "emoticon and question mark". In such a case, the output control unit 143 converts the text "emoticon and question mark" obtained as the result of the speech recognition processing into the symbol ":)?", and causes the symbol ":)?" to be displayed on the recognition result screen 133 (the symbol input mode M2).

Then, when the predetermined speech recognition end trigger is detected, the output control unit 143 settles the text obtained as the result of the speech recognition processing and the symbol ":)?" (the input completion M4). Here, it is considered that the speech recognition end trigger is the same as the text input start trigger, but the speech recognition end trigger may be different from the text input start trigger.

On the other hand, in a case where it is determined that the emotion of the user is weaker than the threshold value, the output control unit 143 estimates that the subsequent symbol input is less likely to be performed and does not automatically activate the symbol input mode. Subsequently, when the predetermined speech recognition end trigger is detected, the output control unit 143 settles the text obtained as the result of the speech recognition processing (the input completion M5). Here, it is considered that the speech recognition end trigger is the same as the text input start trigger, but the speech recognition end trigger may be different from the text input start trigger.

Moreover, the method of determining the emotion information of the user is not particularly limited. In one example, the output control unit 143 may determine the emotion information of the user on the basis of the analysis result of the sound information collected by the sound collection unit 120. In one example, in a case where the intonation conversion of the sound information collected by the sound collection unit 120 is larger than a threshold value, the output control unit 143 may determine that the user's emotion is stronger than the threshold value. On the other hand, in a case where the intonation conversion of the sound information collected by the sound collection unit 120 is smaller than the threshold value, the output control unit 143 may determine that the user's emotion is weaker than the threshold value.

Alternatively, in a case where the volume change of the sound information collected by the sound collection unit 120 is larger than a threshold value, the output control unit 143 may determine that the user's emotion is stronger than the threshold value. On the other hand, in a case where the volume change of the sound information collected by the sound collection unit 120 is smaller than the threshold value, the output control unit 143 may determine that the user's emotion is weaker than the threshold value.

Further, the output control unit 143 may determine the user's emotion information on the basis of the analysis result of the image that is input by the image input unit 110. In one example, in a case where the facial expression analyzed from the image input by the image input unit 110 indicates a strong emotion, the output control unit 143 may determine that the user's emotion is stronger than the threshold value. On the other hand, in a case where the facial expression analyzed from the image input by the image input unit 110 indicates a weak emotion, the output control unit 143 may determine that the user's emotion is weaker than the threshold value.

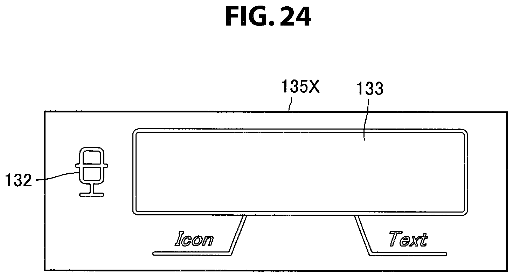

A modified example of the utterance screen 135 is described below. FIG. 24 is a diagram illustrating a modified example of the utterance screen 135. As illustrated in FIG. 24, an utterance screen 135X according to the modified example includes "Icon" indicating a state in which a symbol is input and "Text" indicating a state in which text is input.

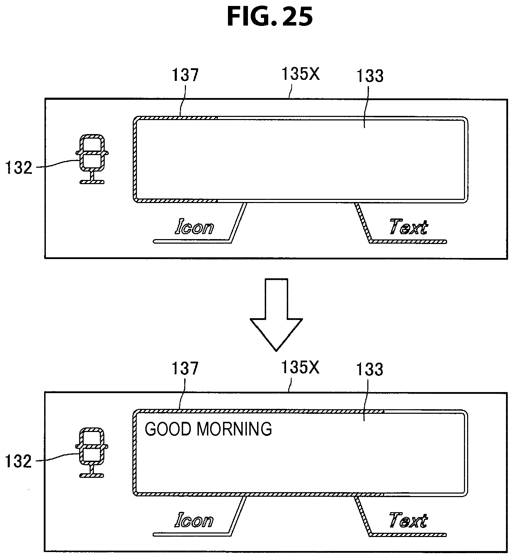

FIG. 25 is a diagram illustrating an example of the utterance screen 135X in a case where text input is performed on the basis of the utterance of the user. As illustrated in FIG. 25, in a state in which text is input, the output control unit 143 displays a text "Good morning" obtained as the result of the speech recognition processing on the recognition result screen 133. In addition, in a state where text is input, the output control unit 143 may cause an indicator 137 attached with a character string "Text" to be expanded or contracted depending on the utterance volume.

FIG. 25 is a diagram illustrating an example of the utterance screen 135X in the case where text input is performed on the basis of the utterance of the user. As illustrated in FIG. 25, in a state where text is input, the output control unit 143 displays the text obtained as the result of the speech recognition processing on the recognition result screen 133. In addition, in a state in which text is input, the output control unit 143 may cause the indicator 137 at the position corresponding to the position of the character string "Text" to be expanded or contracted depending on the utterance volume.

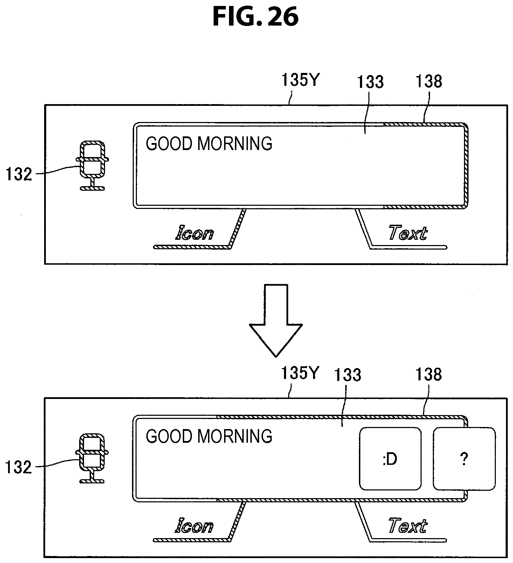

FIG. 26 is a diagram illustrating an example of an utterance screen 135Y in a case where a symbol is input on the basis of the user's utterance. As illustrated in FIG. 26, in a case where the input of the text "Good morning" is completed and the symbol input start trigger is detected, or in a state in which the symbol input mode is automatically activated and the symbol is input, the output control unit 143 converts the text "emoticon and question mark" newly obtained as the result of the speech recognition processing into a symbol, and displays the symbol on the recognition result screen 133. In addition, in a state where a symbol is input, the output control unit 143 may cause an indicator 138 located at the position corresponding to the position of the character string "Icon" to be expanded and contracted depending on the utterance volume.

As described above, it is possible to make the user to get to know a current input mode intuitively by making the expanding direction different between the indicator 137 in the state where text is being input and the indicator 138 in the state where the symbol is being input. Furthermore, it is possible to make the user to get to know a current input mode intuitively by making the color of the indicator 137 different from the color of the indicator 138.

### [1.4. Hardware configuration example]

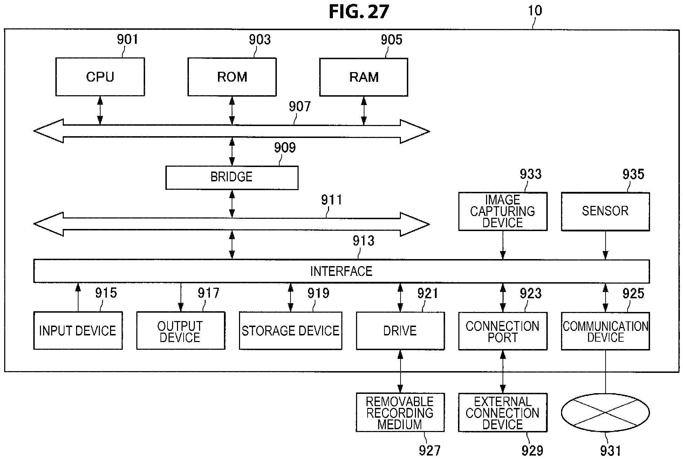

The hardware configuration of the information processing system 10 according to the embodiment of the present disclosure is now described with reference to FIG. 27. FIG. 27 is a block diagram illustrating a hardware configuration example of the information processing system 10 according to the embodiment of the present disclosure.

As illustrated in FIG. 27, the information processing system 10 includes a central processing unit (CPU) 901, a read only memory (ROM) 903, and a random access memory (RAM) 905. In addition, the information processing system 10 may include a host bus 907, a bridge 909, an external bus 911, an interface 913, an input device 915, an output device 917, a storage device 919, a drive 921, a connection port 923, and a communication device 925. The information processing system 10 may further include an image capturing device 933 and a sensor 935 as necessary. In conjunction with, or in place of, the CPU 901, the information processing system 10 may have a processing circuit called a digital signal processor (DSP) or application specific integrated circuit (ASIC).

The CPU 901 functions as an arithmetic processing unit and a control device, and controls the overall operation in the information processing system 10 or a part thereof in accordance with various programs recorded in the ROM 903, the RAM 905, the storage device 919, or the removable recording medium 927. The ROM 903 stores, for example, programs and operation parameters used by the CPU 901. The RAM 905 temporarily stores, for example, programs to be used in the execution by the CPU 901 and parameters that change as appropriate in executing the programs. The CPU 901, the ROM 903, and the RAM 905 are connected with each other via a host bus 907 that is composed of an internal bus such as a CPU bus. Furthermore, the host bus 907 is connected to an external bus 911 such as peripheral component interconnect (PCI)/interface bus via a bridge 909.

The input device 915 is, for example, a device operated by a user, such as a mouse, a keyboard, a touch panel, a button, a switch, and a lever. The input device 915 may include a microphone for detecting user's voice. The input device 915 may be, for example, a remote control device using infrared rays or other radio waves, or may be an external connection device 929 such as a cellular phone conforming to the operation of the information processing system 10. The input device 915 includes an input control circuit that generates an input signal on the basis of the information input by the user and outputs it to the CPU 901. The user inputs various data to the information processing system 10 and instructs the information processing system 10 to perform a processing operation by operating the input device 915. In addition, the image capturing device 933, which will be described later, can also function as an input device by capturing the movement of the user's hand or finger, and the like. In this case, the pointing position may be determined depending on the motion of the hand or the orientation of the finger.

The output device 917 is composed of a device capable of notifying visually or audibly the user of the acquired information. The output device 917 may be a display device such as a liquid crystal display (LCD), a plasma display panel (PDP), an organic electro-luminescence (EL) display, and a projector, a hologram display device, an audio output device such as a speaker and a headphone, as well as printer devices or the like. The output device 917 outputs the result obtained by the processing of the information processing system 10 as a video such as a text or an image, or outputs it as audio such as a voice or sound. In addition, the output device 917 may include, for example, a light for lighting up the surroundings.

The storage device 919 is a data storage device configured as an example of a storage portion of the information processing system 10. The storage device 919 is composed of, for example, a magnetic storage device such as hard disk drives (HDDs), a semiconductor storage device, an optical storage device, and a magneto-optical storage device. The storage device 919 stores programs executed by the CPU 901, various data, various types of data obtained from the outside, and the like.

The drive 921 is a reader-writer for a removable recording medium 927 such as a magnetic disk, an optical disk, a magneto-optical disk, and a semiconductor memory, and is incorporated in the information processing system 10 or externally attached thereto. The drive 921 reads the information recorded in the attached removable recording medium 927 and outputs it to the RAM 905. In addition, the drive 921 writes in the attached removable recording medium 927.

The connection port 923 is a port for directly connecting the device to the information processing system 10. The connection port 923 may be, for example, a universal serial bus (USB) port, an IEEE 1394 port, or a small computer system interface (SCSI) port. In addition, the connection port 923 may be, for example, an RS-232C port, an optical audio terminal, or high-definition multimedia interface (HDMI, registered trademark) port. The external connection device 929 is connected to the connection port 923, and thus various kinds of data can be exchanged between the information processing system 10 and the external connection device 929.

The communication device 925 is, for example, a communication interface composed of a communication device or the like, which is used to be connected to the communication network 931. The communication device 925 may be, for example, a communication card for wired or wireless local area network (LAN), Bluetooth (registered trademark), or wireless USB (WUSB). In addition, the communication device 925 may be, for example, a router for optical communication, a router for asymmetric digital subscriber line (ADSL), or a modem for various communications. The communication device 925 transmits and receives signals or the like using a predetermined protocol such as TCP/IP, for example, with the Internet or other communication devices. In addition, the communication network 931 connected to the communication device 925 is a network connected by wire or wireless, and is, for example, the Internet, home LAN, infrared communication, radio wave communication, satellite communication, or the like.

The image capturing device 933 captures a real space and generates a captured image, by using an image sensor such as charge-coupled device (CCD) or complementary-metal-oxide semiconductor (CMOS) and various members such as a lens for controlling imaging of a subject image on the image sensor. The image capturing device 933 may capture a still image or a moving image.

The sensor 935 is, for example, various sensors such as an accelerometer, a gyro sensor, a geomagnetic sensor, a photosensor, and a sound sensor. The sensor 935 acquires information related to the state of the information processing system 10 itself, such as the attitude of the casing of the information processing system 10, and information related to the surrounding environment of the information processing system 10 such as brightness or noise around the information processing system 10. The sensor 935 may also include a GPS sensor, which receives global positioning system (GPS) signals and measures the latitude, longitude, and altitude of the device.

### <2. Concluding remarks>

As described above, according to the embodiment of the present disclosure, there is provided the information processing device (control unit) 140 that includes the information acquisition unit 141 configured to acquire information related to the accuracy of the speech recognition processing on the sound information on the basis of the sound collection and the output control unit 143 configured to control the speech output mode of the result of the speech recognition processing. Such a configuration makes it possible for the user to get to know the accuracy of the speech recognition processing by virtue of the speech output mode of the text readout result.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

In one example, in the above, the control of the speech output mode may be made different in one sentence (or in one phrase). In one example, the output control unit 143 preferably increases the speech output speed of the beginning of the sentence in which the speech recognition processing is likely to be erroneous as compared with the speech output speed of the other portions.

Further, in a case where the result of the speech recognition processing becomes too long, there is a possibility that it is difficult for the user to listen to the readout result of the speech recognition processing result. Thus, in a case where the result of the speech recognition processing becomes longer beyond a certain extent, the output control unit 143 may omit the readout of the whole or a part of the results of the speech recognition processing.

Further, in one example, the above description is given of the example in which the readout result of the text Tx-10 is output and the text Tx-10 is displayed. However, the text Tx-10 can be not necessarily displayed. In other words, the information processing system 10 may be a system that is not provided with the display unit 130 (e.g., a necklace-type device, etc.).

Further, the above description illustrates an example in which the information processing system 10 has the game console and the television set, and the user U1 performs the online chat using the chat application during the game play. However, the hardware configuration of the information processing system 10 is not limited to this example. In one example, the information processing system 10 may be a wearable device (e.g., a wristwatch, HMD, and necklace type devices, etc.), a stationary type device used in the home, or an in-vehicle device.

Furthermore, it is possible to create a program for causing the hardware such as CPU, ROM and RAM incorporated in the computer to execute functions equivalent to those of the control unit 140 as described above. In addition, a computer-readable recording medium on which the program is recorded can also be provided.

Moreover, when the operation of the information processing system 10 described above is implemented, the position of each component is not limited to a particular one. As a specific example, the control unit 140 may be provided in a device different from a device provided with the image input unit 110, the operation input unit 115, the biometric information input unit 118, the sound collection unit 120, the communication unit 125, the display unit 130, and the sound output unit 150. These devices may be connected via a network. In this case, the control unit 140 may correspond to, for example, a server such as web server or cloud server. The image input unit 110, the operation input unit 115, the biometric information input unit 118, the sound collection unit 120, the communication unit 125, the display unit 130, and the sound output unit 150 may correspond to clients connected to the server via the network.

Further, all the components included in the control unit 140 are not necessarily provided in the same device. In one example, some of the information acquisition unit 141, the speech recognition unit 142, the output control unit 143, and the output unit 144 may be included in a device different from a device provided with the control unit 140. In one example, the speech recognition unit 142 and the output control unit 143 may be included in a server different from a server provided with the control unit 140 including the information acquisition unit 141 and the output unit 144.

Further, the effects described in this specification are merely illustrative or exemplified effects, and are not limitative. That is, with or in the place of the above effects, the technology according to the present disclosure may achieve other effects that are clear to those skilled in the art from the description of this specification.

Additionally, the present technology may also be configured as below.
(1) An information processing device including:
   an information acquisition unit configured to acquire information related to accuracy of speech recognition processing on sound information based on sound collection; and
   an output control unit configured to control a speech output mode of a result of the speech recognition processing on a basis of the information related to the accuracy of the speech recognition processing.
(2) The information processing device according to (1),
   in which the information related to the accuracy of the speech recognition processing includes information related to utterance of a user that is included in the sound information.
(3) The information processing device according to (2),
   in which the information related to the utterance of the user includes at least one of utterance volume of the user, utterance clarity of the user, and utterance length of the user, which are included in the sound information.
(4) The information processing device according to any one of (1) to (3),
   in which the information related to the accuracy of the speech recognition processing includes information related to noise corresponding to utterance of a user that is included in the sound information.
(5) The information processing device according to (4),
   in which the information related to the noise includes noise volume included in the sound information.
(6) The information processing device according to any one of (1) to (5),
   in which the information related to the accuracy of the speech recognition processing includes a confidence level of the result of the speech recognition processing.
(7) The information processing device according to (6),
   in which the output control unit controls the speech output mode on a basis of information related to a user.
(8) The information processing device according to (7),
   in which the information related to the user includes at least one of behavior information of the user, posture information of the user, setting information of the user, environmental information around the user, biometric information of the user, and emotion information of the user.
(9) The information processing device according to any one of (1) to (8),
   in which the information related to the accuracy of the speech recognition processing includes an amount of the result of the speech recognition processing.
(10) The information processing device according to any one of (1) to (9),
   in which the output control unit controls the speech output mode on a basis of a type of content using the result of the speech recognition processing.
(11) The information processing device according to any one of (1) to (10),
   in which the output control unit controls the speech output mode on a basis of execution frequency of the speech recognition processing.
(12) The information processing device according to any one of (1) to (11),
   in which the speech output mode includes a speech output speed of the result of the speech recognition processing.
(13) The information processing device according to any one of (1) to (12),
   in which the speech output mode includes magnitude of speech output of the result of the speech recognition processing.
(14) The information processing device according to any one of (1) to (13),
   in which the speech output mode includes a type of output speech that is output before speech output of the result of the speech recognition processing.
(15) The information processing device according to any one of (1) to (14),
   in which the speech output mode includes sound quality of the result of the speech recognition processing.
(16) The information processing device according to any one of (1) to (15),
   in which the output control unit controls an output unit in such a way that the output unit is prevented from outputting the result of the speech recognition processing in a form of speech in a case where a predetermined condition is satisfied.
(17) The information processing device according to (16),
   in which the predetermined condition includes at least one of a condition related to a line of sight of a user, a condition related to a position of the user, display size of the result of the speech recognition processing, and a condition related to a confidence level of the result of the speech recognition processing.
(18) The information processing device according to (16) or (17),
   in which the predetermined condition includes at least one of a condition in which an operation used to instruct the speech recognition processing to be reactivated by a user is input and a condition in which an operation used to instruct the result of the speech recognition processing to be transmitted is input.
(19) An information processing method including:
   acquiring information related to accuracy of speech recognition processing on sound information based on sound collection; and
   controlling, by a processor, a speech output mode of a result of the speech recognition processing on a basis of the information related to the accuracy of the speech recognition processing.
(20) A program for causing a computer to function as an information processing device including:
   an information acquisition unit configured to acquire information related to accuracy of speech recognition processing on sound information based on sound collection; and
   an output control unit configured to control a speech output mode of a result of the speech recognition processing on a basis of the information related to the accuracy of the speech recognition processing.

### Reference Signs List

- 10: information processing system
- 110: image input unit
- 115: operation input unit
- 118: biometric information input unit
- 120: sound collection unit
- 125: communication unit
- 130: display unit
- 131: video image display screen
- 132: speech recognition processing start button
- 133: recognition result screen
- 134: chat screen
- 135: utterance screen
- 136: speech recognition processing end button
- 140: information processing device (control unit)
- 141: Information acquisition unit
- 142: speech recognition unit
- 143: output control unit
- 144: output unit
- 150: sound output unit
- U1: user

## Claims

1. An information processing device comprising:
an information acquisition unit configured to acquire information related to accuracy of speech recognition processing on sound information based on sound collection; and
an output control unit configured to control a speech output mode of a result of the speech recognition processing on a basis of the information related to the accuracy of the speech recognition processing.

2. The information processing device according to claim 1,
wherein the information related to the accuracy of the speech recognition processing includes information related to utterance of a user that is included in the sound information.

3. The information processing device according to claim 2,
wherein the information related to the utterance of the user includes at least one of utterance volume of the user, utterance clarity of the user, and utterance length of the user, which are included in the sound information.

4. The information processing device according to claim 1,
wherein the information related to the accuracy of the speech recognition processing includes information related to noise corresponding to utterance of a user that is included in the sound information.

5. The information processing device according to claim 4,
wherein the information related to the noise includes noise volume included in the sound information.

6. The information processing device according to claim 1,
wherein the information related to the accuracy of the speech recognition processing includes a confidence level of the result of the speech recognition processing.

7. The information processing device according to claim 6,
wherein the output control unit controls the speech output mode on a basis of information related to a user.

8. The information processing device according to claim 7,
wherein the information related to the user includes at least one of behavior information of the user, posture information of the user, setting information of the user, environmental information around the user, biometric information of the user, and emotion information of the user.

9. The information processing device according to claim 1,
wherein the information related to the accuracy of the speech recognition processing includes an amount of the result of the speech recognition processing.

10. The information processing device according to claim 1,
wherein the output control unit controls the speech output mode on a basis of a type of content using the result of the speech recognition processing.

11. The information processing device according to claim 1,
wherein the output control unit controls the speech output mode on a basis of execution frequency of the speech recognition processing.

12. The information processing device according to claim 1,
wherein the speech output mode includes a speech output speed of the result of the speech recognition processing.

13. The information processing device according to claim 1,
wherein the speech output mode includes magnitude of speech output of the result of the speech recognition processing.

14. The information processing device according to claim 1,
wherein the speech output mode includes a type of output speech that is output before speech output of the result of the speech recognition processing.

15. The information processing device according to claim 1,
wherein the speech output mode includes sound quality of the result of the speech recognition processing.

16. The information processing device according to claim 1,
wherein the output control unit controls an output unit in such a way that the output unit is prevented from outputting the result of the speech recognition processing in a form of speech in a case where a predetermined condition is satisfied.

17. The information processing device according to claim 16,
wherein the predetermined condition includes at least one of a condition related to a line of sight of a user, a condition related to a position of the user, display size of the result of the speech recognition processing, and a condition related to a confidence level of the result of the speech recognition processing.

18. The information processing device according to claim 16,
wherein the predetermined condition includes at least one of a condition in which an operation used to instruct the speech recognition processing to be reactivated by a user is input and a condition in which an operation used to instruct the result of the speech recognition processing to be transmitted is input.

19. An information processing method comprising:
acquiring information related to accuracy of speech recognition processing on sound information based on sound collection; and
controlling, by a processor, a speech output mode of a result of the speech recognition processing on a basis of the information related to the accuracy of the speech recognition processing.

20. A program for causing a computer to function as an information processing device comprising:
an information acquisition unit configured to acquire information related to accuracy of speech recognition processing on sound information based on sound collection; and
an output control unit configured to control a speech output mode of a result of the speech recognition processing on a basis of the information related to the accuracy of the speech recognition processing.
